(19) Europäisches Patentamt
European Patent Office
Office européen des brevets

(11) EP 2 065 416 A1

(12) **EUROPEAN PATENT APPLICATION**
published in accordance with Art. 153(4) EPC

(43) Date of publication:
**03.06.2009 Bulletin 2009/23**

(21) Application number: **07806941.6**

(22) Date of filing: **07.09.2007**

(51) Int Cl.:
***C08G 18/42*** (2006.01) ***C09J 175/06*** (2006.01)

(86) International application number:
**PCT/JP2007/067509**

(87) International publication number:
**WO 2008/041451 (10.04.2008 Gazette 2008/15)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **02.10.2006 JP 2006271136**
**22.02.2007 JP 2007042864**

(71) Applicant: **Mitsui Chemicals Polyurethanes, Inc.**
**Tokyo 105-7117 (JP)**

(72) Inventors:
- **HONMA, Shirou**
**Sodegaura-shi, Chiba 299-0265 (JP)**
- **KUNIHIRO, Tamotsu**
**Sodegaura-shi, Chiba 299-0265 (JP)**
- **IWA, Tsuyoshi**
**Sodegaura-shi, Chiba 299-0265 (JP)**

(74) Representative: **HOFFMANN EITLE**
**Patent- und Rechtsanwälte**
**Arabellastrasse 4**
**81925 München (DE)**

# (54) POLYAMIDE RESIN CONTAINING TERMINAL ISOCYANATE GROUP, ALKOXYSILANE-MODIFIED POLYAMIDE RESIN, PROCESSES FOR PRODUCTION OF THE RESINS, HOT-MELT ADHESIVE AGENT, AND CURED RESIN PRODUCT

(57) A terminal isocyanate group-containing polyamide resin can be produced by reacting a terminal carboxyl group-containing oligomer and a polyisocyanate compound at such a ratio that the amount of an isocyanate group exceeds that of a carboxyl group. An alkoxysilane-modified polyamide resin can be produced by reacting the terminal isocyanate group-containing polyamide resin with an alkoxysilane compound containing a secondary amine.

EP 2 065 416 A1

## Description

TECHNICAL FIELD

The present invention relates to a terminal isocyanate group-containing polyamide resin, an alkoxysilane-modified polyamide resin, and processes for production thereof, a hot-melt adhesive agent containing those resins, and a cured resin product of those resins.

BACKGROUND ART

Terminal isocyanate group-containing urethane prepolymers produced by reaction between polyester polyol and polyisocyanate have been widely known as reactive hot-melt adhesive agents hitherto (see, for example, the following Patent Document 1).
Further, alkoxysilyl group-containing urethane prepolymers produced by reaction between terminal isocyanate group-containing urethane prepolymers and amino group-containing silane coupling agents have also been known as reactive hot-melt adhesive agents (see, for example, the following Patent Document 2).
In order to impart improved heat resistance and machine strength to such reactive hot-melt adhesive agents, various processes for introducing an amide bond into a polyester polyol have conventionally been proposed.
For example, there has been proposed a moisture-curable hot-melt adhesive composition produced by reaction between a block polyol having a polyester block and a polyamide block, and a polyisocyanate compound or a compound having a hydrolyzable silyl group (see, for example, the following Patent Document 3).
Further, there has been proposed a moisture-crosslinking melt adhesive agent produced by reacting diisocyanate with alkoxy alkylene aminosilane to synthesize a urea derivative, and then reacting the urea derivative with a carboxyl group-containing polyamide (see, for example, the following Patent Document 4).

Patent Document 1: Japanese Unexamined Patent Publication No. 2003-277717
Patent Document 2: Japanese Unexamined Patent Publication No. 7-278320
Patent Document 3: Japanese Unexamined Patent Publication No. 10-110153
Patent Document 4: Japanese Unexamined Patent Publication No. 1-503149

DISCLOSURE OF THE INVENTION

PROBLEMS TO BE SOLVED

The moisture-curable hot-melt adhesive composition described in Patent Document 3 has an amide bond introduced therein by modifying a polyester block with a polyamide block.
In the moisture-crosslinking melt adhesive agent described in Patent Document 4, an amide bond is introduced by first reacting diisocyanate with alkoxy alkylene aminosilane to synthesize a urea derivative, and then reacting the urea derivative with a carboxyl group-containing polyamide.
However, any of the hot-melt adhesive agents described above fails to exhibit sufficient heat resistance and machine strength. Accordingly, further improved physical properties are required.
It is an object of the present invention to provide a terminal isocyanate group-containing polyamide resin, an alkoxysilane-modified polyamide resin, which are excellent in heat resistance and machine strength, and processes for production thereof, a hot-melt adhesive agent containing those resins, and a cured resin product of those resins.

MEANS FOR SOLVING THE PROBLEM

To achieve the above object, the terminal isocyanate group-containing polyamide resin is produced by reacting a terminal carboxyl group-containing oligomer and a polyisocyanate compound at such a ratio that the amount of an isocyanate group exceeds that of a carboxyl group.
In the terminal isocyanate group-containing polyamide resin of the present invention, it is preferable that the terminal carboxyl group-containing oligomer is selected from the group consisting of polyester polycarboxylic acid produced by reaction between a polybasic acid and a polyhydric alcohol, and dimer acid.
The alkoxysilane-modified polyamide resin of the present invention is produced by reacting the above-mentioned terminal isocyanate group-containing polyamide resin and an alkoxysilane compound containing a secondary amine.
In the alkoxysilane-modified polyamide resin of the present invention, it is preferable that the terminal carboxyl group-containing oligomer is selected from the group consisting of polyester polycarboxylic acid produced by reaction between

a polybasic acid and a polyhydric alcohol, and dimer acid.

In the alkoxysilane-modified polyamide resin of the present invention, it is preferable that the alkoxysilane compound is represented by the following general formula (1):

[Chem. 3]

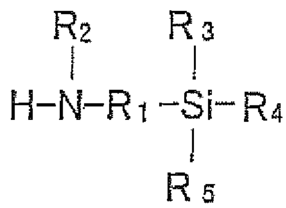

(1)

(where R1 represents an alkylene group having 1 to 20 carbon atoms, R2 represents a hydrocarbon group having 1 to 20 carbon atoms, and R3, R4, and R5 may be the same or different from each other, and each represents an alkoxy group or an alkyl group having 1 to 20 carbon atoms, with proviso that at least one of R3, R4, and R5 represents an alkoxy group.)

The hot-melt adhesive agent of the present invention includes the above-mentioned terminal isocyanate group-containing polyamide resin and/or the above-mentioned alkoxysilane-modified polyamide resin.

It is preferable that the hot-melt adhesive agent of the present invention is a one-part moisture-curable adhesive agent.

The cured resin product of the present invention is produced by curing the above-mentioned terminal isocyanate group-containing polyamide resin and/or the above-mentioned alkoxysilane-modified polyamide resin.

The process for producing the terminal isocyanate group-containing polyamide resin according to the present invention includes reacting a terminal carboxyl group-containing oligomer and a polyisocyanate compound at such a ratio that the amount of an isocyanate group exceeds that of a carboxyl group, in the presence of a catalyst selected from the group consisting of alkali metal salts and/or alkaline earth metal salts in an amount 0.001 to 10 parts by mole per 100 parts by mole of all the carboxyl groups in the terminal carboxyl group-containing oligomer.

In the process for producing the terminal isocyanate group-containing polyamide resin according to the present invention, it is preferable that the reaction is performed at 120˚C or less.

In the process for producing the terminal isocyanate group-containing polyamide resin according to the present invention, it is preferable that the catalyst is magnesium stearate.

In the process for producing the terminal isocyanate group-containing polyamide resin according to the present invention, it is preferable that the terminal carboxyl group-containing oligomer is selected from the group consisting of polyester polycarboxylic acid produced by reaction between a polybasic acid and a polyhydric alcohol, and dimer acid.

The process for producing the alkoxysilane-modified polyamide resin according to the present invention includes reacting the above-mentioned terminal isocyanate group-containing polyamide resin and an alkoxysilane compound containing a secondary amine.

In the process for producing the alkoxysilane-modified polyamide resin according to the present invention, it is preferable that the terminal carboxyl group-containing oligomer and the polyisocyanate compound are reacted at 120˚C or less.

In the process for producing the alkoxysilane-modified polyamide resin according to the present invention, it is preferable that the terminal isocyanate group-containing polyamide resin and the alkoxysilane compound are reacted at 150˚C or less.

In the process for producing the alkoxysilane-modified polyamide resin according to the present invention, it is preferable that the catalyst is magnesium stearate.

In the process for producing the alkoxysilane-modified polyamide resin according to the present invention, it is preferable that the terminal carboxyl group-containing oligomer is selected from the group consisting of polyester polycarboxylic acid produced by reaction between a polybasic acid and a polyhydric alcohol, and dimer acid.

In the process for producing the alkoxysilane-modified polyamide resin according to the present invention, it is preferable that the alkoxysilane compound is represented by the following general formula (1):

[Chem. 4]

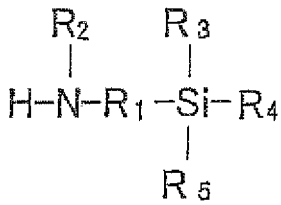

(1)

(where R1 represents an alkylene group having 1 to 20 carbon atoms, R2 represents a hydrocarbon group having 1 to 20 carbon atoms, and R3, R4, and R5 may be the same or different from each other, and each represents an alkoxy group or an alkyl group having 1 to 20 carbon atoms, with proviso that at least one of R3, R4, and R5 represents an alkoxy group.)

EFFECT OF THE INVENTION

The terminal isocyanate group-containing polyamide resin of the present invention has an amide bond introduced therein by reacting a terminal carboxyl group-containing oligomer with a polyisocyanate compound. Further, the alkoxysilane-modified polyamide resin of the present invention is produced by reacting the terminal isocyanate group-containing polyamide resin with an alkoxysilane compound containing a secondary amine.

Therefore, the terminal isocyanate group-containing polyamide resin and alkoxysilane-modified polyamide resin of the present invention have excellent heat conversion and machine strength, and can be used, for example, for a hot-melt adhesive agent.

Furthermore, the processes for producing the terminal isocyanate group-containing polyamide resin and the alkoxysilane-modified polyamide resin according to the present invention each are capable of easily introducing an amide bond which can improve heat resistance and machine strength.

EMBODIMENT OF THE INVENTION

First, the terminal isocyanate group-containing polyamide resin of the present invention will be described in detail.

The terminal isocyanate group-containing polyamide resin of the present invention can be produced by reacting a terminal carboxyl group-containing oligomer with a polyisocyanate compound.

In the present invention, the terminal carboxyl group-containing oligomer is a polycarboxylic acid having a carboxyl group in its molecular terminal, of which the number average molecular weight is in the range of, for example, 200 to 40000, or preferably 500 to 10000. The number average molecular weight can be measured by gel permeation chromatography (GPC). In the GPC measurement, a number average molecular weight from a peak including the molecular weight (retention time) at the highest peak in the measured chromatogram is calculated based on a calibration curve prepared using standard polyethylene glycol. Thus, the number average molecular weight is determined as a reduced value of the standard polyethylene glycol. The terminal carboxyl group-containing oligomer has a viscosity, which has been measured at 100˚C with a cone and plate viscometer, of preferably 30000 mPa·s or less.

Examples of the terminal carboxyl group-containing oligomer include a polyester polycarboxylic acid and a dimer acid.

The polyester polycarboxylic acid can be produced, for example, by reaction between a polybasic acid and a polyhydric alcohol.

Examples of the polybasic acid include dicarboxylic acids such as oxalic acid, malonic acid, succinic acid, methyl succinic acid, glutaric acid, adipic acid, pimelic acid, suberic acid, azelaic acid, sebacic acid, other aliphatic dicarboxylic acid (having 11 to 13 carbon atoms), hydrogenated dimer acid, maleic acid, fumaric acid, itaconic acid, orthophthalic acid, isophthalic acid, terephthalic acid, toluene dicarboxylic acid, dimer acid, and HET acid; and alkyl esters of those dicarboxylic acids.

Further examples of the polybasic acid include acid anhydrides derived from the carboxylic acids exemplified above, such as oxalic anhydride, succinic anhydride, maleic anhydride, phthalic anhydride, 2-alkyl (12 to 18 carbon atoms) succinic anhydride, tetrahydrophthalic anhydride, and trimellitic anhydride.

Still further examples of the polybasic acid include acid halides derived from the carboxylic acids exemplified above, such as oxalic acid dichloride, adipic acid dichloride, and sebacic acid dichloride.

These polybasic acids can be used alone or in combination of two or more kinds. Among them, a dicarboxylic acid and an alkyl ester thereof are preferable.
Examples of the polyhydric alcohol include diols having two hydroxyl groups, and polyols having three or more hydroxyl groups.
Examples of the diol include aliphatic diols including C2 to C22 alkane diols such as ethylene glycol, propylene glycol, trimethylene glycol, 1,4-butylene glycol, 1,3-butylene glycol, 1,2-butylene glycol, 1,5-pentanediol, 3-methyl-1,5-pentanediol, 2,2-dimethyl-l,3-propanediol, neopentyl glycol, 1,6-hexandiol, 2,5-hexandiol, 2,2-diethyl-1,3-propanediol, 3,3-dimethylol heptane, 2-ethyl-2-butyl-1,3-propanediol, 1,12-dodecanediol, and 1,18-octadecanediol; and alkenediols such as 2-butene-1,4-diol and 2,6-dimethyl-1-octene-3,8-diol.
Further examples of the diol include alicyclic diols such as 1,4-cyclohexanediol, 1,4-cyclohexanedimethanol, and hydrogenated bisphenol A or C2 to C4 alkylene oxide adducts thereof.
Still further examples of the diol include aromatic diols such as resorcinol, xylylene glycol, bis(hydroxyethoxy)benzene, bis(hydroxyethylene) terephthalate, bisphenol A, bisphenol S, bisphenol F, and C2 to C4 alkylene oxide adducts thereof.
Still further examples of the diol include polyether diols such as diethylene glycol, triethylene glycol, dipropylene glycol, polyethylene glycol, polypropylene glycol, polyethylene polypropylene block glycol, and polytetramethylene ether glycol.
Examples of the polyols having three or more hydroxyl groups include triols such as glycerol, 2-methyl-2-hydroxymethyl-1,3-propanediol, 2,4-dihydroxy-3-hydroxymethyl pentane, 1,2,6-hexane triol, trimethylolethane, trimethylolpropane, 2-methyl-2-hydroxymethyl-1,3-propanediol, 2,4-dihydroxy-3-(hydroxymethyl) pentane, 2,2-bis(hydroxymethyl)-3-butanol, and other aliphatic triols (8 to 24 carbon atoms) ; and polyols having four or more hydroxyl groups such as tetramethylolmethane, pent ae rythritol, dipentaerythritol, D-sorbitol, xylitol, D-mannitol, and D-mannite.
These polyhydric alcohols can be used alone or in combination of two or more kinds. Among them, a diol is preferable.
The polyester polycarboxylic acid can be produced by mixing a polybasic acid and a polyhydric alcohol at such a ratio that the amount of the acid group (a carboxyl group, a carboxylate, an acid anhydride group, or an acid halide) of the polybasic acid exceeds that of the hydroxyl group of the polyhydric alcohol (the COOH/OH ratio exceeds 1.0, or preferably 1.01 to 2.10), and subjecting the mixture to an esterification reaction.
The esterification reaction, such as a condensation reaction or a transesterification reaction, may be performed under conditions known in the art, for example, at normal pressure in an inert gas atmosphere, at a reaction temperature of 100 to 250˚C, for a reaction time of 1 to 50 hours, and if necessary, a catalyst (organic tin catalyst, organic titanium catalyst, amine catalyst, alkali metal salt and alkaline earth metal salt both to be described later, etc.) or a solvent can be used.
The polyester polycarboxylic acid thus produced has a number average molecular weight of, for example, 200 to 20000, or preferably 500 to 10000. It also has an acid value of, for example, 5 to 600 mg KOH/g, or preferably 10 to 250 mg KOH/g, and a hydroxyl value of 5 mg KOH/g or less, or preferably 3 mg KOH/g or less.
The dimer acid is a dimer formed by an intermolecular polymerization reaction of two or more unsaturated acid molecules from a vegetable oil fatty acid (e.g., tall oil fatty acid, soybean oil fatty acid, etc.), and the one used as an industrial material predominantly contains a dimer of an unsaturated fatty acid having 18 carbon atoms (dimer acid content: about 71 to 76% by weight), and further contains a monomer acid or a trimmer acid.
As the dimer acid, for example, a high-purity dimer acid produced by removing the trimmer acid and the monomer acid by molecular distillation and purification, a hydrogenated dimer acid produced by causing the unsaturated bond disappearance by a hydrogenation reaction, or a hydrogenated high-purity dimer acid produced by removing the trimmer acid and the monomer acid by molecular distillation and purification, and by causing the unsaturated bond disappearance by a hydrogenation reaction is preferably used, or a hydrogenated high-purity dimer acid is more preferably used.
As the terminal carboxyl group-containing oligomer, the polyester polycarboxylic acid and the dimer acid can be used alone or in combination.
In the present invention, examples of the polyisocyanate compound include an aliphatic polyisocyanate, a alicyclic polyisocyanate, an aralkyl polyisocyanate, and an aromatic polyisocyanate.
Examples of the aliphatic polyisocyanate include aliphatic diisocyanates such as hexamethylene diisocyanate (HDI), trimethylene diisocyanate, tetramethylene diisocyanate, pentamethylene diisocyanate, 1,2-propylene diisocyanate, 1,2-, 2,3- or 1,3-butylene diisocyanate, 2,4,4- or 2,2,4-trimethyl-hexamethylene diisocyanate, and 2,6-diisocyanatomethylcaproate.
Examples of the alicyclic polyisocyanate include alicyclic diisocyanates such as 3-isocyanatomethyl-3,5,5-trimethylcyclohexyl isocyanate (isophorone diisocyanate, IPDI), 4,4'-, 2,4'- or 2,2'-dicyclohexylmethane diisocyanate or a mixture thereof ($H_{12}$MDI), 1, 3- or 1, 4-bis (isocyanatomethyl) cyclohexane or a mixture thereof (hydrogenated xylylene diisocyanate, $H_6$XDI), 2,5- or 2,6-bis(isocyanatomethyl) norbornane or a mixture thereof (NBDI), 1,3-cyclopentane diisocyanate, 1,4-cyclohexane diisocyanate, 1,3-cyclohexane diisocyanate, methyl-2,4-cyclohexane diisocyanate, and methyl-2,6-cyclohexane diisocyanate.

Examples of the aralkyl polyisocyanate include aromatic-aliphatic diisocyanates such as 1,3- or 1,4-xylylene diisocyanate or a mixture thereof (XDI), 1,3- or 1, 4-tetramethylxylylene diisocyanate or a mixture thereof (TMXDI), and ω, ω'-diisocyanato-1,4-diethylbenzene.

Examples of the aromatic polyisocyanate include aromatic diisocyanates such as 4,4'-, 2,4'- or 2,2'-diphenylmethane diisocyanate or a mixture thereof (MDI), 2,4- or 2,6-tolylene diisocyanate or a mixture thereof (TDI), 3,3'-dimethoxybiphenyl-4,4'-diisocyanate, 1,5-naphthalene diisocyanate (NDI), m-, or p-phenylene diisocyanate or a mixture thereof, 4,4'-diphenyl diisocyanate, and 4,4'-diphenylether diisocyanate.

Examples of the polyisocyanate compound also include mutimers (e.g., dimers, trimers, etc.) of the above-mentioned polyisocyanates; and modified polyisocyanates thereof such as a biuret-modified polyisocyanate formed by reaction of the above-mentioned polyisocyanate or a multimer thereof with water, an allophanate-modified polyisocyanate formed by reaction of the above-mentioned polyisocyanate or a multimer thereof with an alcohol or the above-mentioned polyhydric alcohol, an oxadiazinetrione-modified polyisocyanate formed by reaction of the above-mentioned polyisocyanate or a multimer thereof with carbon dioxide, or a polyol-modified polyisocyanate formed by reaction of the above-mentioned polyisocyanate or a multimer thereof with the above-mentioned polyhydric alcohol. The polyisocyanate compound further contains a sulfur-containing polyisocyanates such as phenyl diisothiocyanate.

These polyisocyanate compounds can be used alone or in combination of two or more kinds. From the viewpoint of easy control of side reaction, an aliphatic polyisocyanate, a alicyclic polyisocyanate, and an aralkyl polyisocyanate are preferable.

The terminal isocyanate group-containing polyamide resin can be produced by mixing a terminal carboxyl group-containing oligomer and a polyisocyanate compound at such a ratio that the amount of the isocyanate group of the polyisocyanate compound exceeds that of the carboxyl group of the terminal carboxyl group-containing oligomer (the NCO/COOH ratio exceeds 1.0, or preferably 1.05 to 2.50), and subjecting the mixture to an amidation reaction.

When the NCO/COOH equivalent ratio is within the above range, production can be stable. On the contrary, when the NCO/COOH equivalent ratio is 1.00 or less, the isocyanate group content of the terminal isocyanate group-containing polyamide resin decreases, which requires a longer time for moisture-curing or may not achieve complete curing. On the other hand, when the NCO/COOH equivalent ratio is excessively high, the residual amount of free polyisocyanate compound increases, so that the polyisocyanate compound may volatilize during heating/melting, thereby deteriorating the work environment in some cases.

The amidation reaction is performed, for example, in the presence of a catalyst at a reaction temperature of 120˚C or less, or preferably 40 to 120˚C, more preferably 40 to 100˚C, for a reaction time of 0.5 to 50 hours, or preferably 1 to 15 hours, though not limited thereto.

Preferred examples of the catalyst include an alkali metal salt and an alkaline earth metal salt. Examples of the alkali metal salt include lithium fluoride, lithium chloride, lithium hydroxide, sodium fluoride, sodium chloride, sodium hydroxide, potassium fluoride, potassium chloride, and potassium hydroxide. Examples of the alkaline earth metal salt include calcium stearate, calcium perchlorate, calcium chloride, calcium hydroxide, magnesium stearate, magnesium perchlorate, magnesium chloride, and magnesium hydroxide. These catalysts can be used alone or in combination of two or more kinds. From the viewpoint of amide selectivity of the amidation reaction, calcium stearate, calcium perchlorate, magnesium stearate, and magnesium perchlorate are preferable, or magnesium stearate is more preferable.

The catalyst is added, for example, in an amount of 0.001 to 10 parts by mole, or preferably 0.005 to 2 parts by mole, per 100 parts by mole of all the carboxyl groups in the terminal carboxyl group-containing oligomer. When the amount of the catalyst added is less than this range, the amidation reaction may not sufficiently proceed, which in turn may decrease productivity. On the other hand, even when the amount is more than this range, the amide selectivity of the amidation reaction does not change, which may be economically disadvantageous.

Further, when the reaction temperature is in the above range, production can be stable. On the other hand, when the reaction temperature exceeds 120˚C, the side reaction of the isocyanate group is accelerated, so that the isocyanate group content becomes lower than the theoretical value, which may increase the viscosity of the resulting resin. This deteriorates the workability during heating/melting, whereby a desired cured resin product cannot be obtained in some cases. On the other hand, when the reaction temperature is too low, the reaction between the carboxyl group of the terminal carboxyl group-containing oligomer and the isocyanate group of the isocyanate compound may not sufficiently proceed, which in turn may decrease productivity.

The amidation reaction can be preferably performed under normal pressure. It can also be performed under a reduced pressure while removing the carbon dioxide generated during the reaction, and furthermore, it can be performed under pressurization with the carbon dioxide generated during the reaction.

In the amidation reaction, the isocyanate group is decomposed when reacted with water (moisture in the air, etc.). Therefore, in order to avoid contact with moisture in the air, this reaction is preferably performed under an inert gas atmosphere. Examples of the inert gas include nitrogen gas, and helium gas. Among them, nitrogen gas is preferable.

If necessary, a solvent can also be used in the amidation reaction.

In this reaction, specifically, the terminal carboxyl group-containing oligomer, the isocyanate compound, and the catalyst

may be mixed at once, or the terminal carboxyl group-containing oligomer and the isocyanate compound can be preliminarily mixed, followed by mixing the catalyst therewith.

Alternatively, the terminal carboxyl group-containing oligomer and the catalyst may be preliminarily mixed, followed by mixing the isocyanate compound therewith, or the isocyanate compound and the catalyst can be preliminarily mixed, followed by mixing the terminal carboxyl group-containing oligomer therewith.

When a hydroxide such as lithium hydroxide, sodium hydroxide, potassium hydroxide, calcium hydroxide, or magnesium hydroxide is used as the catalyst, the terminal carboxyl group-containing oligomer and the hydroxide are mixed to react with each other, so that water is produced. In this case, it is therefore necessary to remove water by performing dehydration treatment after the mixing and then mix the isocyanate compound with the resulting mixture. This can suppress decomposition of the isocyanate group due to the water thus produced.

The above reaction can also be performed in stages. For example, at a first step, a terminal carboxyl group-containing oligomer and a polyisocyanate compound are made to react with each other so that the NCO/COOH equivalent ratio is less than 1.0, to synthesize a terminal carboxyl group-containing polyamide resin. Then, at a second step, the terminal carboxyl group-containing polyamide resin and a polyisocyanate compound of a different type from the one used in the first step are made to react with each other so that the NCO/COOH equivalent ratio finally exceeds 1.0, to produce a terminal isocyanate group-containing polyamide resin. Thus, the synthesis of the terminal isocyanate group-containing polyamide resin according to this manner can provide a resin of which the structural units derived from the polyisocyanate compound are different at its molecular terminal and in its molecular inside. In the above two steps of reaction, a catalyst may be added at either the first or the second step, or may further be added at both steps.

The terminal isocyanate group-containing polyamide resin thus produced has a number average molecular weight of, for example, 250 to 40000, or preferably 500 to 10000. It also has an isocyanate group content of 90 to 110%, or preferably 95 to 105% of the calculated value from the mixing amount. When the isocyanate group content is in the above range, moisture-curing can be completely performed in a relatively short period of time. Therefore, carbon dioxide generated during the moisture-curing cannot be taken in the cured resin product, preventing decrease in adhesive strength. The amide conversion is usually 76 to 100%, or preferably 86 to 100%. When the amide conversion is in the above range, a cured resin product having excellent heat resistance, adhesion, and machine strength can be produced.

The terminal isocyanate group-containing polyamide resin is moisture-cured because it has an isocyanate group at its molecular terminal. Therefore, the terminal isocyanate group-containing polyamide resin can be used in various fields as a one-part moisture-curable resin composition. In particular, it is useful as an adhesive component of a one-part moisture-curable hot-melt adhesive agent.

When the terminal isocyanate group-containing polyamide resin is used as an adhesive component of a one-part moisture-curable hot-melt adhesive agent, the mixing amount of the terminal isocyanate group-containing polyamide resin is, for example, 1 part by weight or more, or preferably 10 parts by weight or more, per 100 parts by weight of the hot-melt adhesive agent.

The cured resin product produced by moisture-curing the terminal isocyanate group-containing polyamide resin is excellent in heat resistance, adhesion, and mechanical strength. The moisture-curing can usually be performed under the conditions of room temperature without using any catalyst. Further, a curing catalyst to be described later can be added.

Next, the alkoxysilane-modified polyamide resin of the present invention will be described in detail.

The alkoxysilane-modified polyamide resin of the present invention can be produced by reacting the above-mentioned terminal isocyanate group-containing polyamide resin with an alkoxysilane compound containing a secondary amine.

The alkoxysilane compound containing a secondary amine is a silane compound having both of at least one secondary amine and at least one alkoxy group, and is represented, for example, by the following general formula (1):

[Chem. 5]

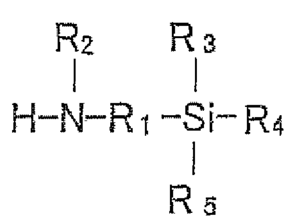

(1)

(where R1 represents an alkylene group having 1 to 20 carbon atoms, R2 represents a hydrocarbon group

having 1 to 20 carbon atoms, R3, R4, and R5 may be the same or different from each other, and each represents an alkoxy group or an alkyl group having 1 to 20 carbon atoms, with proviso that at least one of R3, R4, and R5 represents an alkoxy group.)

In the general formula (1), examples of the alkylene group having 1 to 20 carbon atoms represented by R1 include methylene, ethylene, propylene, butylene, pentylene, hexylene, heptylene, octylene, nonylene, decylene, dodecylene, tetradecylene, hexadecylene, octadecylene, and eicosanylene. Among them, an alkylene group having 1 to 10 carbon atoms is preferable, or an alkylene group having is to 4 carbon atoms is more preferable.

Examples of the hydrocarbon group having 1 to 20 carbon atoms represented by R2 include an aliphatic hydrocarbon group, an alicyclic hydrocarbon group, an aralkyl hydrocarbon group, and an aromatic hydrocarbon group. Preferred examples of the aliphatic hydrocarbon group include an alkyl group having 1 to 10 carbon atoms, preferably 1 to 4 carbon atoms, such as methyl, ethyl, propyl, iso-propyl, butyl, iso-butyl, sec-butyl, tert-butyl, pentyl, iso-pentyl, sec-pentyl, hexyl, heptyl, n-octyl, isooctyl, 2-ethylhexyl, nonyl, and decyl.

Preferred examples of the alicyclic hydrocarbon group include a cycloalkyl group having 3 to 8 carbon atoms, such as cyclopropyl, cyclobutyl, cyclopentyl, cyclohexyl, cycloheptyl, and cyclooctyl.

Preferred examples of the aralkyl hydrocarbon group include an aralkyl group having 7 to 16 carbon atoms, such as benzyl, 1-phenylethyl, 2-phenylethyl, 1-phenylpropyl, 2-phenylpropyl, 3-phenylpropyl, diphenylmethyl, o, m, or p-methylbenzyl, o, m, or p-ethylbenzyl, o, m, or p-isopropylbenzyl, o, m, or p-tert-butylbenzyl, 2,3-, 2,4-, 2,5-, 2,6-, 3,4- or 3,5-dimethylbenzyl,2,3,4-, 3,4,5-, or 2,4,6-trimethylbenzyl, 5-isopropyl-2-methylbenzyl, 2-isopropyl-5-methylbenzyl, 2-methyl-5-tert-butylbenzyl, 2,4-, 2,5-, or 3, 5-diisopropylbenzyl, 3,5-di- tert-butylbenzyl, 1-(2-methylphenyl) ethyl, 1-(3-methylphenyl) ethyl, 1-(4-methylphenyl) ethyl, 1-(2-isopropylphenyl) ethyl, 1-(3-isopropylphenyl) ethyl, 1-(4-isopropylphenyl) ethyl, 1-(2-tert-buthylphenyl) ethyl, 1-(4-tert-buthylphenyl) ethyl, 1-(2-isopropyl-4-methylphenyl) ethyl, 1-(4-isopropyl-2-methylphenyl) ethyl, 1-(2,4-dimethylphenyl) ethyl, 1-(2,5-dimethylphenyl) ethyl, 1-(3,5-dimethylphenyl) ethyl, and 1-(3,5-di-tert-buthylphenyl) ethyl.

Preferred examples of the aromatic hydrocarbon group include an aryl group having 6 to 14 carbon atoms, such as phenyl, tolyl, xylyl, biphenyl, naphthyl, anthryl, phenanthryl, and azulenyl.

Examples of the alkoxy group having 1 to 20 carbon atoms represented by R3, R4, and R5 include methoxy, ethoxy, propoxy, isopropoxy, butoxy, isobutoxy, sec-butoxy, tert-butoxy, pentyloxy, isopentyloxy, neopentyloxy, hexyloxy, octyloxy, decyloxy, dodecyloxy, tetradecyloxy, hexadecyloxy, octadecyloxy, and eicosanyloxy. Among them, an alkoxy group having 1 to 10 carbon atoms is preferable, or an alkoxy group having 1 to 4 carbon atoms is more preferable.

Examples of the alkyl group having 1 to 20 carbon atoms represented by R3, R4, and R5 include methyl, ethyl, propyl, isopropyl, butyl, isobutyl, sec-butyl, tert-butyl, pentyl, isopentyl, sec-pentyl, hexyl, heptyl, n-octyl, isooctyl, 2-ethylhexyl, nonyl, decyl, isodecyl, dodecyl, tetradecyl, hexadecyl, octadecyl, and eicosanyl. Among them, an alkyl group having 1 to 10 carbon atoms is preferable, or an alkyl group having 1 to 4 carbon atoms is more preferable.

In the general formula (1), when one of R3, R4, and R5 is an alkoxy group and the other two are alkyl groups, the alkoxysilane compound in the general formula (1) represents N-hydrocarbon-substituted aminoalkyl-dialkyl monoalkoxysilane; when two of them are alkoxy groups and the other one is an alkyl group, the alkoxysilane compound in the general formula (1) represents N-hydrocarbon substituted aminoalkyl-monoalkyl dialkoxysilane; and when three of them are alkoxy groups, the alkoxysilane compound in the general formula (1) represents N-hydrocarbon substituted aminoalkyl-trialkoxysilane. In the general formula (1), the alkoxysilane compound is preferably an N-hydrocarbon substituted aminoalkyl-trialkoxysilane.

Specific examples of the alkoxysilane compound include N-phenyl aminoalkyl-alkoxysilane such as N-phenyl-γ-aminopropyl trimethoxysilane, N-phenyl-γ-aminopropyl triethoxysilane, N-phenyl-γ-aminopropyl methyldimethoxysilane, N-phenyl-γ-aminopropyl methyldiethoxysilane, N-phenyl-γ-aminopropyl ethyldimethoxysilane, N-phenyl-γ-aminopropyl ethyldiethoxysilane, N-phenyl-γ-aminoethyl trimethoxysilane, N-phenyl-γ-aminoethyl triethoxysilane, N-phenyl-γ-aminoethyl methyldimethoxysilane, N-phenyl-γ-aminoethyl methyldiethoxysilane, N-phenyl-γ-aminoethyl ethyldimethoxysilane, and N-phenyl-γ-aminoethyl ethyldiethoxysilane.

Other examples of the alkoxysilane compound include N-alkyl-aminoalkyl-alkoxysilane such as N-ethyl-γ-aminopropyl trimethoxysilane, N-ethyl-γ-aminopropyl methyldimethoxysilane, N-methyl-γ-aminopropyl trimethoxysilane and N-methyl-γ-aminopropyl methyldimethoxysilane.

Among them, N-phenyl-γ-aminopropyl trimethoxysilane and N-methyl-γ-aminopropyl trimethoxysilane are preferable. These alkoxysilane compounds can be used alone or in combination of two or more kinds.

The alkoxysilane-modified polyamide resin can be produced by mixing a terminal isocyanate group-containing polyamide resin and an alkoxysilane compound at such a ratio that the amount of the isocyanate group of the terminal isocyanate group-containing polyamide resin is almost equivalent to that of the amino group of the alkoxysilane compound (the NCO/NH ratio is 0.6 to 1.4, or preferably 0.9 to 1.1), and subjecting the mixture to a ureation reaction.

The ureation reaction is performed, for example, at a reaction temperature of 150˚C or less, or preferably 40 to 140˚C, more preferably 40 to 120˚C, for a reaction time of 0.5 to 50 hours, or preferably 1 to 15 hours, though not limited thereto.

When the reaction temperature is in the above range, production can be stable. On the other hand, when the reaction temperature exceeds 150˚C, a part of the alkoxysilyl group of the alkoxysilane compound is hydrolyzed to form a silanol group, and the silanol group thus formed is subjected to a condensation reaction with another silanol group or the alkoxy silyl group of different molecules to thereby form a siloxane bond, so that a reaction mass thickens, which in turn may decrease productivity. On the other hand, when the reaction temperature is too low, the reaction between the isocyanate group of the terminal isocyanate group-containing polyamide resin and the amino group of the alkoxysilane compound may not sufficiently proceed, which in turn may decrease productivity.

In the ureation reaction, the isocyanate group and the amino alkoxysilyl group are decomposed when reacted with water (moisture in the air, etc.). Therefore, in order to avoid contact with moisture in the air, this reaction is preferably performed under an inert gas atmosphere. Examples of the inert gas include nitrogen gas, and helium gas, and nitrogen gas is preferable.

In this reaction, specifically, the terminal isocyanate group-containing polyamide resin and the alkoxysilane compound may be mixed at once. Alternatively, the terminal isocyanate group-containing polyamide resin may be preliminarily charged, followed by mixing the alkoxysilane compound therewith, or the alkoxysilane compound can be preliminarily charged, followed by mixing the terminal isocyanate group-containing polyamide resin therewith.

The alkoxysilane-modified polyamide resin thus produced has a number average molecular weight of, for example 500 to 40000, or preferably 500 to 10000. The urea conversion (alkoxysilane modification ratio) is usually 76 to 100%, or preferably 86 to 100%. When the urea conversion is in the above range, a cured resin product having excellent heat resistance, adhesion, and machine strength can be produced.

The alkoxysilane-modified polyamide resin is moisture-cured by hydrolysis of the alkoxysilyl group. Therefore, the alkoxysilane-modified polyamide resin can be used in various fields as a one-part moisture-curable resin composition. In particular, it is useful as an adhesive component of a one-part moisture-curable hot-melt adhesive agent.

When the alkoxysilane-modified polyamide resin is used as an adhesive component of a one-part moisture-curable hot-melt adhesive agent, the mixing amount of the alkoxysilane-modified polyamide resin is, for example, 1 part by weight or more, or preferably 10 parts by weight or more, per 100 parts by weight of the hot-melt adhesive agent.

The cured resin product produced by moisture-curing the alkoxysilane-modified polyamide resin is excellent in heat resistance, adhesion, and mechanical strength. The moisture-curing can be performed usually under high temperature, preferably by adding a curing catalyst.

To the one-part moisture-curable resin composition containing the terminal isocyanate group-containing polyamide resin and/or the alkoxysilane-modified polyamide resin, if necessary, an additive can be added without inhibiting the excellent effect of the present invention.

Examples of the additive include a curing catalyst, a silane coupling agent, an internal releasing agent, a tackifier, a softening agent, a stabilizer, an antioxidant, an ultraviolet absorber, a light stabilizer, a plasticizer, a filler, a dye, a pigment, and an optical brightener.

Examples of the curing catalyst include an organotin catalyst, a metal complex, a basic catalyst, and an organic phosphoric acid compound.

Examples of the organotin catalyst include dibutyltin dilaurate, dioctyltin dimaleate, dibutyltin phthalate, stannous octoate, dibutyltin methoxide, dibutyltin diacetylacetate, and dibutyltin diacetate.

Examples of the metal complex include titanate compounds such as tetrabuthyl titanate, tetraisopropyl titanate, and triethanolamine titanate; metal carboxylates such as lead octylate, lead naphthenate, nickel naphthenate, and cobalt naphthenate; and metal acetylacetonate complexes such as aluminum acetyl acetonate complex and vanadium acetyl acetonate complex.

Examples of the basic catalyst include primary amines such as methylamine, ethylamine, propylamine, isopropylamine, isopropyl alcohol amine, butylamine, 1-methyl butylamine, isobutylamine, pentylamine, octylamine, laurylamine, monoethanolamine, diethylamino propylamine, oleylamine, cyclohexylamine, guanidine, 2-ethylhexylamine, triethylenetetramine, aniline, phenylenediamine, toluidine, toluylamine, benzylamine, xylenediamine, and naphthylamine; secondary amines such as dimethylamine, diethylamine, diethanolamine, diethylenetriamine, dibutylamine, N-methyl-butylamine, piperidine, diisopentylamine, N-ethylnaphthylamine, benzylaniline, and diphenylguanidine; tertiary amines such as trimethylamine, triethylamine, triethanolamine, tripropylamine, tributylamine, N,N-dimethyl-butylamine, N,N-dimethyl-octylamine, N,N-dimethyl-laurylamine, 1,4-diazabicyclo[2.2.2]octane (DABCO), 1,8-diazabicyclo[5.4.0]undec-7-ene (DBU); and quaternary ammonium salts such as tetramethylammonium chloride and benzalkonium chloride.

Examples of the organic phosphoric acid compound include monomethylphosphoric acid, di-n-butylphosphoric acid, and triphenyl phosphate. Further, other acid catalysts and basic catalysts may be used.

Among them, an organotin catalyst and a metal complex are preferable. These curing catalysts can be used alone or in combination of two or more kinds. The mixing amount of the curing catalyst is, for example, 0.0001 to 10 parts by weight, or preferably 0.001 to 5 parts by weight, per 100 parts by weight of the one-part moisture-curable resin composition.

Examples of the silane coupling agent include alkoxysilanes such as tetramethoxysilane and tetraethoxysilane; aminosilanes such as N-β-(aminoethyl)-γ-aminopropyl trimethoxysilane, γ-aminopropyl trimethoxysilane, γ-aminopropyl

triethoxysilane, N-β-(aminoethyl)-γ-aminopropyl triethoxysilane, N-β-(aminoethyl)-γ-propylmethyl dimethoxysilane, n-(dimethoxymethylsilylpropyl) ethylenediamine, n-(triethoxysilylpropyl) ethylenediamine, and N-phenyl-γ-aminopropyl trimethoxysilane; epoxysilanes such as γ-glycidoxypropyltrimetoxysilane, γ-glycidoxypropyltriethoxysilane, β-(3,4-epoxycyclohexyl) ethyltrimethoxysilane, and di(γ-glycidoxypropyl) dimethoxysilane; vinylsilanes such as vinyltriethoxysilane; isocyanatosilanes such as γ-isocyanato propyltrimethoxysilane; and chlorosilanes such as vinyl trichlorosilane.

Among them, an alkoxysilane and an aminosilane are preferable. These silane coupling agents can be used alone or in combination of two or more kinds. The mixing amount of the silane coupling agent is, for example, 0.01 to 50 parts by weight, or preferably 0.1 to 30 parts by weight, per 100 parts by weight of the one-part moisture-curable resin composition.

The one-part moisture-curable resin composition is readily moisture-cured, for example, by heating at room temperature to 200°C for 1 to 800 hours in the atmosphere. The resulting cured resin product is excellent in heat resistance, adhesion, and mechanical strength.

When used as a one-part moisture-curable type hot-melt adhesive agent, for example, the one-part moisture-curable resin composition is heat-melted with a known coating apparatus equipped with a heating device, such as a roll coater, a spray coater, and a hand spray gun, and then applying the melted resin to adherends in various patterns, whereby the adherends can be bonded together. At this time, the adherends may be bonded together before curing of the hot-melt adhesive agent, or they can be bonded together after the hot-melt adhesive agent once cured is reheated and activated.

Examples of the adherend include iron, copper, aluminum, tin plate, stainless steel (SUS), coated steel sheet, zinc steel sheet, polyethylene, polypropylene, PET, acrylic resin, ABS resin, vinyl chloride resin, polycarbonate, polyamide (nylon, aramid), polystyrene, polyurethane, rubber, wood, plywood, particle board, cardboard, paper, and cloth, though not limited thereto.

EXAMPLES

While in the following, the present invention will be described in further detail with reference to Synthesis Examples, Examples, and Comparative Examples, the present invention is not limited to any of them. Analyses and measurements in Synthesis Examples, Examples, and Comparative Examples were performed according to the following processes.

(Acid Value)

Determined according to "Partial acid value" under Section 5.3 "Acid value" of JIS K6901 "Test methods for liquid unsaturated polyester resins."

(Hydroxyl Value)

Determined according to Section 6.4 "hydroxyl number" of JIS K1557 "Polyols for use in the production of polyurethane."

(Isocyanate Group Content)

Determined according to Section 6.3 "Isocyanate group content" of JIS K7301 "Testing methods for tolylene diisocyanate type prepolymers for thermosetting urethane elastomers."

(Number Average Molecular Weight)

A sample (0.03 g) was dissolved in 10 ml of tetrahydrofuran at room temperature, filtered with a filter having a pore size of 0.45 μm, and thereafter measured with a gel permeation chromatograph (GPC) on the following conditions. As for the number average molecular weight, a number average molecular weight from a peak including the molecular weight (retention time) at the highest peak in the measured chromatogram was calculated based on a calibration curve prepared using standard polyethylene glycol.

Apparatus: HLC-8020 (manufactured by TOSOH CORP.)
Column : Manufactured by TOSOH CORP., TSK gel guard column HXL-L + G1000H XL + G2000H XL + G3000H XL
Eluent: Tetrahydrofuran
Flow rate: 0.8 ml/min
Column temperature: 40°C

Injection volume: 20 μl
Detector: RI

(Melt Viscosity)

Determined using a cone-and-plate rotational viscometer (manufactured by ICI) on the conditions of a cone type of 100P; a rotation speed of 75 rpm; and a temperature of 100°C.

(Amide Conversion)

(1) Terminal isocyanate group-containing polyamide resin produced from polyester polycarboxylic acid:

Calculated by NMR on the following conditions.
Apparatus: JNM-AL400 (manufactured by JEOL)
Frequency: 400 MHz
Measurement temperature: Room temperature
Number of integrations: 128 times

A sample (20 mg) was dissolved in 0.65 ml of dimethyl sulfoxide-d6 (containing 0.05% TMS) at room temperature, and then $^1$H-NMR was measured on the above conditions. The amide conversion was calculated from the integral for the proton (H) of the isocyanate derivative and the integral for the proton (NH) in the amide.
(2) Terminal isocyanate group-containing polyamide resin produced from dimer acid:

The amount of carbon dioxide generated was obtained from the reduced weight of the reaction mass after the reaction relative to the total charged amount, and the amide conversion was calculated from the following equation.

(Total charged amount - Weight of reaction mass after reaction)

/[(Amount of dimer acid charged/COOH equivalent weight of dimer acid charged) x 44] x 100 (%)

(Urea Conversion)

Calculated by NMR on the following conditions.

Apparatus: JNM-AL400 (manufactured by JEOL)
Frequency: 400 MHz
Measurement temperature: Room temperature
Number of integrations: 128 times

A sample (20 mg) was dissolved in 0.65 ml of dimethyl sulfoxide-d6 (containing 0.05% TMS) at room temperature, and then $^1$H-NMR was measured on the above conditions.

(1) Alkoxysilane compound having a phenyl-substituted amino group:

The urea conversion was calculated from the integral (A) for the proton (H) of the alkoxysilane compound having a phenyl-substituted amino group and of its derivative, and the integral (B) for the proton (H) of the alkoxysilane compound having a phenyl-substituted amino group by the following equation.
$$\text{Urea conversion} = (A - B)/A \times 100\ (\%)$$

(2) Alkoxysilane compound having an alkyl-substituted amino group:

The urea conversion was calculated from the integral for the proton (NH) in the amide of the alkoxysilane derivative having an alkyl-substituted amino group and the integral for the proton (NH) in the urea.

(Heat resistance: 10% mass reduction temperature)

According to JIS K7120 "Testing Methods of Plastics by Thermogravimetry", thermogravimetry was performed on the conditions of using dry air as an inflow gas; an inflow gas volume of 200 ml/min; and a heating rate of 10˚C/min, and the mass reduction rate $M_L$ (%) was calculated according to the following equation. The heat resistance was evaluated at a temperature at which the mass reduction rate $M_L$ was 10%.

$$M_L = (m_o - m_t)/m_0 \times 100$$

$m_o$: Mass (mg) before heating
$m_t$: Mass (mg) at temperature t (˚C) after heating

(Heat resistance: Softening initiation temperature)

The dynamic viscoelasticity test was conducted on the following conditions, and the temperature (softening initiation temperature) at the time when a rapid reduction of the storage modulus (E') value started was measured.

Apparatus: Dynamic viscoelasticity measuring apparatus DVA-200 (manufactured by IT MEASUREMENT CONTROL Co, Ltd.)
Sample: Gauge length: 2.5 cm, gauge width: 0.485 cm
Deformation mode: Tension
Static/Dynamic stress ratio: 1.8 to 2.0
Specified distortion: 0.05 to 0.10% (E > 108 Pa)
Specified heating rate: 5˚C/min
Measurement frequency: 10 Hz

(Tensile Strength)

Determined according to Section 5 "Tension test" of JIS K7312 "Physical testing methods for molded products of thermosetting polyurethane elastomers."

Device: Tensile strength testing machine RTA-500 L-XL (manufactured by ORIENTEC Co., Ltd.)
Dumbbell: Dumbbell No. 4 type
Thickness: 0.5 to 0.8 mm
Temperature: 23˚C
Humidity: 50% RH
Test speed: 300 mm/min

Synthesis Example 1 (Production of Polyester Polycarboxylic Acid (A))

A 5-liter flask equipped with a reflux condenser, a water separator, a nitrogen gas inlet tube, a thermometer, and a stirrer was charged with 2045.1 parts by weight of adipic acid and 1306.5 parts by weight of neopentyl glycol (the COOH/OH equivalent ratio: 1.12), and heated with a mantle heater while introducing nitrogen.

When the temperature reached 150˚C, water started distilling off, and the flask was then heated up to 230˚C while distilling water. Thereafter, the dehydration condensation was continued at 230˚C. The end point of the dehydration condensation was determined when the acid and hydroxyl values of the reaction product reached their predetermined values, and the reaction product was taken from the flask and then cooled, to produce a polyester polycarboxylic acid

(A). The polyester polycarboxylic acid (A) thus produced had an acid value of 54.8 mg KOH/g and a hydroxyl value of 2.7 mg KOH/g.

Synthesis Example 2 (Production of Polyester Polycarboxylic Acid (B))

The same procedures as in Synthesis Example 1 were carried out except that the end point of the dehydration condensation was changed, to produce a polyester polycarboxylic acid (B). The polyester polycarboxylic acid (B) thus produced had an acid value of 53.7 mg KOH/g and a hydroxyl value of 0.4 mg KOH/g.

Synthesis Example 3 (Production of Polyester Polyol (A))

A 5-liter flask equipped with a reflux condenser, a water separator, a nitrogen gas inlet tube, a thermometer, and a stirrer was charged with 1623.99 parts by weight of adipic acid, 1342.55 parts by weight of neopentyl glycol (the OH/COOH equivalent ratio: 1.16), and 1.93 parts by weight of dibutyltin oxide, and heated with a mantle heater while introducing nitrogen.

When the temperature reached 150˚C, water started distilling off, and the flask was then heated up to 230˚C while distilling water. Thereafter, the dehydration condensation was continued at 230˚C. When the hydroxyl and acid values of the reaction product reached their predetermined values, the reaction product was taken from the flask and then cooled, to produce a polyester polyol (A). The polyester polyol (A) thus produced had a hydroxyl value of 53.5 mg KOH/g and an acid value of 0.6 mg KOH/g.

Example 1

(Production of Terminal Isocyanate Group-Containing Polyamide Resin (A))

A 2-liter reaction flask equipped with a reflux condenser, a nitrogen gas inlet tube, a thermometer, and a stirrer was charged with 834.1 parts by weight of polyester polycarboxylic acid (A), 165.9 parts by weight of 1,3-bis(isocyanatomethyl) cyclohexane (trade name: TAKENATE 600, manufactured by Mitsui Chemicals Polyurethanes, Inc.) (the NCO/COOH equivalent ratio: 2.10), 0.253 parts by weight of magnesium stearate (0.053 parts by mole per 100 parts by mole of the carboxyl group of the polyester polycarboxylic acid), and 0.500 parts by weight of FLOWLEN AC-1190 (a defoaming agent, manufactured by Kyoeisha Chemical Co., Ltd.).

Subsequently, the flask was heated up to 100˚C with a mantle heater while introducing nitrogen. The reaction was then continued at a reaction temperature of 100˚C for 5 hours, to produce a terminal isocyanate group-containing polyamide resin (A).

The terminal isocyanate group-containing polyamide resin (A) thus produced had an isocyanate content of 3.7% by weight (theoretical value: 3.7% by weight), a viscosity of 6400 mPa·s/100˚C, and a number average molecular weight of 4800.

The $^1$H-NMR of the terminal isocyanate group-containing polyamide resin (A) produced was measured. Referring to the NMR chart, when the integral of the 0.7346H region that appeared at a chemical shift of 0.6 ppm, in 10H of the alicyclic portion of the 1,3-bis(isocyanatomethyl) cyclohexane derivative, was determined to be 0.7346, the amide conversion was calculated from the integral for the amide NH proton that appeared at a chemical shift of 7.8 ppm. As a result, the amide conversion was found to be 89%.

(Production of Hot-Melt Adhesive Agent (A) and Cured Resin Product (A))

A plastic container was charged with 50 parts by weight of the terminal isocyanate group-containing polyamide resin (A), and was subjected to a vacuum defoaming treatment with a vacuum dryer at 100˚C for 30 minutes, to prepare a one-part moisture-curable hot-melt adhesive agent (A).

The hot-melt adhesive agent (A) was casted on an SUS plate, which an appropriate amount of a releasing agent MIRAX RS-102 (manufactured by Katsuzai Chemicals Corp.) was applied to a surface of and was heated to 100˚C, so that the cured product after moisture-curing had a thickness of 0.2 to 0.8 mm, and the casted product was then moisture-cured under air at 23˚C, 50% RH, to produce a cured resin product (A).

When the heat resistance and tensile strength of the cured resin product (A) thus produced were determined by the above methods, the cured resin product (A) had a 1.0% mass reduction temperature of 377˚C and a tensile strength of 16.7 MPa (cf. Table 1).

Example 2

(Production of Terminal Isocyanate Group-Containing Polyamide Resin (B))

The same procedures as in Example 1 were carried out except that the reaction temperature was changed from 100˚C to 110˚C, to produce a terminal isocyanate group-containing polyamide resin (B).
The terminal isocyanate group-containing polyamide resin (B) thus produced had an isocyanate content of 3.5% by weight (theoretical value: 3.7% by weight), a viscosity of 14000 mPa·s/100˚C, and a number average molecular weight of 7200.
The $^1$H-NMR of the terminal isocyanate group-containing polyamide resin (B) produced was measured. Referring to the NMR chart, when the integral of the 0.7346H region appeared at a chemical shift of 0.6 ppm, in 10H of the alicyclic portion of the 1,3-bis(isocyanatomethyl) cyclohexane derivative, was determined to be 0.7346, the amide conversion was calculated from the integral for the amide NH proton that appeared at a chemical shift of 7.8 ppm. As a result, the amide conversion was found to be 76%.

(Production of Hot-Melt Adhesive Agent (B) and Cured Resin Product (B))

The same procedures as in Example 1 were carried out except that the terminal isocyanate group-containing polyamide resin (B) was used in place of the terminal isocyanate group-containing polyamide resin (A), to prepare a hot-melt adhesive agent (B), so that a cured resin product (B) was produced.
When the heat resistance and tensile strength of the cured resin product (B) thus produced were determined by the above methods, the cured resin product (B) had a 10% mass reduction temperature of 376˚C and a tensile strength of 15.1 MPa (cf. Table 1).

Example 3

(Production of Terminal Isocyanate Croup-Containing Polyamide Resin (C))

A 1-liter reaction flask equipped with a reflux condenser, a nitrogen gas inlet tube, a thermometer, and a stirrer was charged with 202.0 parts by weight of 1,3-bis (isocyanatomethyl) cyclohexane (trade name: TAKENATE 600, manufactured by Mitsui Chemicals Polyurethanes, Inc., isocyanato content: 43.3% by weight), 0.308 parts by weight of magnesium stearate (0.050 parts by mole per 100 parts by mole of the carboxyl group of the dimer acid), and 0.250 parts by weight of FLOWLEN AC-1190 (a defoaming agent, manufactured by Kyoeisha Chemical Co., Ltd.), and heated up to 70˚C with a mantle heater while introducing nitrogen.
Subsequently, 298.1 parts by weight of a hydrogenated high-purity dimer acid (trade name: PRIPOL1009, manufactured by Unichema, acid value: 196 mg KOH/g) (the NCO/COOH equivalent ratio: 2.00) was added thereto and heated up to 100˚C. The reaction was then continued at a reaction temperature of 100˚C for 4 hours, to produce a terminal isocyanate group-containing polyamide resin (C).
The terminal isocyanate group-containing polyamide resin (C) thus produced had an isocyanate content of 9.2% by weight (theoretical value: 9.6% by weight), a viscosity of 5400 mPa·s/100˚C, and a number average molecular weight of 2300.
The amide conversion was calculated from the amount of carbon dioxide that was obtained from the reduced weight of the reaction mass after the reaction relative to the total charged amount was 87%.

(Production of Hot-Melt Adhesive Agent (C) and Cured Resin Product (C))

A plastic container was charged with 50 parts by weight of the terminal isocyanate group-containing polyamide resin (C), and was subjected to a vacuum defoaming treatment with a vacuum dryer at 100˚C for 30 minutes, to prepare a one-part moisture-curable hot-melt adhesive agent (C).
The hot-melt adhesive agent (C) was casted on an SUS plate, which an appropriate amount of a releasing agent MIRAX RS-102 (manufactured by Katsuzai Chemicals Corp.) was applied to a surface of and was heated to 100˚C, so that the cured product after moisture-curing had a thickness of 0.2 to 0.8 mm, and the casted product was then moisture-cured under air at 23˚C, 50% RH, to produce a cured resin product (C).
When the heat resistance and tensile strength of the cured resin product (C) thus produced were determined by the above methods, the cured resin product (C) had a 10% mass reduction temperature of 362˚C and a tensile strength of 41.9 MPa (cf. Table 1).

Comparative Example 1

(Production of Terminal Isocyanate Group-Containing Polyurethane Resin (A))

A 2-liter reaction flask equipped with a reflux condenser, a nitrogen gas inlet tube, a thermometer, and a stirrer was charged with 837.5 parts by weight of polyester polyol (A) and 162.5 parts by weight of 1,3-bis(isocyanatomethyl) cyclohexane (trade name: TAKENATE 600, manufactured by Mitsui Chemicals Polyurethanes, Inc., isocyanate content: 43.3% by weight) (the NCO/OH equivalent ratio: 2.10). Subsequently, the flask was heated up to 75˚C with a mantle heater while introducing nitrogen. The reaction was then continued at a reaction temperature of 75˚C for 5 hours, to produce a terminal isocyanate group-containing polyurethane resin (A).

The terminal isocyanate group-containing polyurethane resin (A) thus produced had an isocyanate content of 3.4% by weight, a viscosity of 3900 mPa·s/100˚C, and a number average molecular weight of 3700.

(Production of Hot-Melt Adhesive Agent (D) and Cured Resin Product (D))

A plastic container was charged with 50 parts by weight of the terminal isocyanate group-containing polyamide resin (A), and was subjected to a vacuum defoaming treatment with a vacuum dryer at 100˚C for 30 minutes, to prepare a one-part moisture-curable hot-melt adhesive agent (D).

The hot-melt adhesive agent (D) was casted on an SUS plate, which an appropriate amount of a releasing agent MIRAX RS-102 (manufactured by Katsuzai Chemicals Corp.) was applied to a surface of and was heated to 100˚C, so that the cured product after moisture-curing had a thickness of 0.2 to 0.8 mm, and the casted product was then moisture-cured under air at 23 ˚C, 50% RH, to produce a cured resin product (D).
When the heat resistance and tensile strength of the cured resin product (D) thus produced were determined by the above methods, the cured resin product (D) had a 10% mass reduction temperature of 342˚C and a tensile strength of 12.6 MPa (cf. Table 1).

Comparative Example 2

(Production of Terminal Isocyanate Group-Containing Polyurethane Resin (B))

A 1-liter reaction flask equipped with a reflux condenser, a nitrogen gas inlet tube, a thermometer, and a stirrer was charged with 295.5 parts by weight of dimer diol (hydroxyl value: 200 mg KOH/g), 204.5 parts by weight of 1,3-bis (isocyanatomethyl) cyclohexane (trade name: TAKENATE 600, manufactured by Mitsui Chemicals Polyurethanes, Inc., isocyanate content: 43.3% by weight) (the NCO/OH equivalent ratio: 2.00), and 0.100 parts by weight of stannous octoate. Subsequently, the flask was heated up to 80˚C with a mantle heater while introducing nitrogen. The reaction was then continued at a reaction temperature of 80˚C for 4 hours, to produce a terminal isocyanate group-containing polyurethane resin (B).

The terminal isocyanate group-containing polyurethane resin (B) thus produced had an isocyanate content of 9.0% by weight.

(Production of Hot-Melt Adhesive Agent (E) and Cured Resin Product (E))

A plastic container was charged with 50 parts by weight of the terminal isocyanate group-containing polyamide resin (B), and was subjected to a vacuum defoaming treatment with a vacuum dryer at 100˚C for 30 minutes, to prepare a one-part moisture-curable hot-melt adhesive agent (E).

The hot-melt adhesive agent (E) was casted on an SUS plate, which an appropriate amount of a releasing agent MIRAX RS-102 (manufactured by Katsuzai Chemicals Corp.) was applied to a surface of and was heated to 100˚C, so that the cured product after moisture-curing had a thickness of 0.2 to 0.8 mm, and the casted product was then moisture-cured under air at 23˚C, 50% RH, to produce a cured resin product (E).
When the heat resistance and tensile strength of the cured resin product (E) thus produced were determined by the above methods, the cured resin product (E) had a 10% mass reduction temperature of 325˚C and a tensile strength of 31.4 MPa (cf. Table 1).

Example 4

(Production of Terminal Isocyanate Group-Containing Polyamide Resin (D))

A 2-liter reaction flask equipped with a reflux condenser, a nitrogen gas inlet tube, a thermometer, and a stirrer

was charged with 842.4 parts by weight of the polyester polycarboxylic acid (B), 0.240 parts by weight of magnesium stearate (0.050 parts by mole per 100 parts by mole of the carboxyl group of the polyester polycarboxylic acid), and 0.500 parts by weight of FLOWLEN AC-1190 (a defoaming agent, manufactured by Kyoeisha Chemical Co., Ltd.).

Subsequently, the flask was heated up to 50˚C with a mantle heater while introducing nitrogen, and 157.6 parts by weight of 1,3-bis(isocyanatomethyl) cyclohexane (trade name: TAKENATE 600, manufactured by Mitsui Chemicals Polyurethanes, Inc.) (the NCO/COOH equivalent ratio: 2.01) was then added thereto. Thereafter, the flask was heated up to 70˚C, and the reaction was then continued at a reaction temperature of 70˚C for 7 hours, to produce a terminal isocyanate group-containing polyamide resin (D).

The terminal isocyanate group-containing polyamide resin (D) thus produced had an isocyanate group content of 3.7% by weight (theoretical value: 3.7% by weight).

The $^1$H-NMR of the terminal isocyanate group-containing polyamide resin (D) produced was measured. Referring to the NMR chart, when the integral of the 0.7381H region appeared at a chemical shift of 0.6 ppm, in 10H of the alicyclic portion of the 1,3-bis(isocyanatomethyl) cyclohexane derivative, was determined to be 0.7381, the amide conversion was calculated from the integral for the amide NH proton that appeared at a chemical shift of 7.8 ppm. As a result, the amide conversion was found to be 87%.

(Production of Alkoxysilane-Modified Polyamide Resin (A))

A 1-liter reaction flask equipped with a reflux condenser, a nitrogen gas inlet tube, a thermometer, and a stirrer was charged with 500.0 parts by weight of the terminal isocyanate group-containing polyamide resin (D). The flask was then heated up to 70˚C with a mantle heater while introducing nitrogen.

Subsequently, 112.5 parts by weight of N-phenyl-γ-aminopropyl trimethoxysilane (trade name: KBM573, manufactured by Shin-Etsu Chemical Co., Ltd.) (the NCO/NH equivalent ratio: 1.00) was added dropwise over 1 hour using a dropping funnel. After completion of the dropwise addition, the reaction was continued at 70˚C for 2 hours, to produce an alkoxysilane-modified polyamide resin (A).

The alkoxysilane-modified polyamide resin (A) thus produced had an isocyanate group content of 0.1% by weight or less, a viscosity of 2600 mPa·s/100˚C, and a number average molecular weight of 3700.

The $^1$H-NMR of the alkoxysilane-modified polyamide resin (A) produced was measured. Referring to the NMR chart, when the integral for 5H of the phenyl portion of the N-phenyl-γ-aminopropyl trimethoxysilane and its derivative that appeared at a chemical shift of 6.4 to 7.5 ppm was determined to be 5.0000, the integral for 5H of the phenyl portion of the N-phenyl-γ-aminopropyl trimethoxysilane that appeared at a chemical shift of 6.4 to 7.1 ppm was 0.2984. When the urea conversion was calculated from these values, it found to be 94%.

(Production of Hot-Melt Adhesive Agent (F) and Cured Resin Product (F))

A plastic container was charged with 50 parts by weight of the alkoxysilane-modified polyamide resin (A), 0.5 parts by weight of stannous octoate, and 0. 5 parts by weight of tetraethoxysilane, and was subjected to a vacuum defoaming treatment with a vacuum dryer at 100˚C for 30 minutes, to prepare a one-part moisture-curable hot-melt adhesive agent (F).

The hot-melt adhesive agent (F) was casted on an SUS plate, which an appropriate amount of a releasing agent MIRAX RS-102 (manufactured by Katsuzai Chemicals Corp.) was applied to a surface of and was heated to 100˚C, so that the cured product after moisture-curing had a thickness of 0.8 to 1.5 mm. The casted product was then left to stand for 48 hours on the conditions of 23˚C, 50% RH under air, and was moisture-cured over 48 hours on the conditions of 80˚C, 30% RH under air, to produce a cured resin product (F).

When the heat resistance and tensile strength of the cured resin product (F) thus produced were determined by the above methods, the cured resin product (F) had a softening initiation temperature of 230˚C and a tensile strength of 5.24 MPa (cf. Table 2).

Example 5

(Production of Terminal Isocyanate Group-Containing Polyamide Resin (E))

A 2-liter reaction flask equipped with a reflux condenser, a nitrogen gas inlet tube, a thermometer, and a stirrer was charged with 1084.3 parts by weight of the polyester polycarboxylic acid (B), 0.309 parts by weight of magnesium stearate (0.050 parts by mole per 100 parts by mole of the carboxyl group of the polyester polycarboxylic acid), and 0.650 parts by weight of FLOWLEN AC-1190 (a defoaming agent, manufactured by Kyoeisha Chemical Co., Ltd.).

Subsequently, the flask was heated up to 50˚C with a mantle heater while introducing nitrogen, 129.4 parts by weight of 1,3-bis (isocyanatomethyl) cyclohexane (trade name: TAKENATE 600, manufactured by Mitsui Chemicals

Polyurethanes, Inc.) was then added dropwise using a dropping funnel over 2 minutes, and the mixture was aged for 5 minutes. Subsequently, 86.3 parts by weight of 1,3-bis(isocyanatomethyl) cyclohexane (total NCO/COOH equivalent ratio: 2.14) was added dropwise over 10 minutes. After completion of the dropwise addition, the temperature was 70˚C. Thereafter, the reaction was continued at a reaction temperature of 70˚C for 8 hours, to produce a terminal isocyanate group-containing polyamide resin (E).

The terminal isocyanate group-containing polyamide resin (E) thus produced had an isocyanate group content of 3.9% by weight (theoretical value: 4.0% by weight).

The $^1$H-NMR of the terminal isocyanate group-containing polyamide resin (E) produced was measured. Referring to the NMR chart, when the integral of the 0.7381H region appeared at a chemical shift of 0.6 ppm, in 10H of the alicyclic portion of the 1,3-bis(isocyanatomethyl) cyclohexane derivative, was determined to be 0. 7381, the amide conversion was calculated from the integral for the amide NH proton that appeared at a chemical shift of 7.8 ppm. As a result, the amide conversion was found to be 98%.

(Production of Alkoxysilane-Modified Polyamide Resin (B))

The same procedures as in Example 4 were carried out except that 242.7 parts by weight of the terminal isocyanate group-containing polyamide resin (E) was charged in place of the terminal isocyanate group-containing polyamide resin (D), the amount of the N-phenyl-γ-aminopropyl trimethoxysilane was changed to 57.3 parts by weight (the NCO/NH equivalent ratio: 1.00), and the dropping temperature and the reaction temperature were changed to 120˚C, so that an alkoxysilane-modified polyamide resin (B) was produced.

The alkoxysilane-modified polyamide resin (B) thus produced had an isocyanate group content of 0.1% by weight or less, a viscosity of 6100 mPa·s/100˚C, and a number average molecular weight of 4400.

The $^1$H-NMR of the alkoxysilane-modified polyamide resin (B) produced was measured. Referring to the NMR chart, when the integral for 5H of the phenyl portion of the N-phenyl-γ-aminopropyl trimethoxysilane and its derivative that appeared at a chemical shift of 6.4 to 7.5 ppm was determined to be 5.0000, the integral for 5H of the phenyl portion of the N-phenyl-γ-aminopropyl trimethoxysilane that appeared at a chemical shift of 6.4 to 7.1 ppm was 0.8405. When the urea conversion was calculated from these values, it was found to be 83%.

(Production of Hot-Melt Adhesive Agent (G) and Cured Resin Product (G))

The same procedures as in Example 4 were carried out except that 50 parts by weight of the alkoxysilane-modified polyamide resin (B) was used in place of the alkoxysilane-modified polyamide resin (A), to prepare a hot-melt adhesive agent (G), so that a cured resin product (G) was produced.

When the heat resistance and tensile strength of the cured resin product (G) thus produced were determined by the above methods, the cured resin product (G) had a softening initiation temperature of 220˚C and a tensile strength of 3.96 MPa (cf. Table 2).

Example 6

(Production of Alkoxysilane-Modified Polyamide Resin (C))

The same procedures as in Example 5 were carried out except that the dropping temperature and the reaction temperature were changed from 120˚C to 130˚C, to produce an alkoxysilane-modified polyamide resin (C).

The alkoxysilane-modified polyamide resin (C) thus produced had an isocyanate group content of 0.1% by weight or less, a viscosity of 6400 mPa·s/100˚C, and a number average molecular weight of 4100.

The $^1$H-NMR of the alkoxysilane-modified polyamide resin (C) produced was measured. Referring to the NMR chart, when the integral for 5H of the phenyl portion of the N-phenyl-γ-aminopropyl trimethoxysilane and its derivative that appeared at a chemical shift of 6.4 to 7.5 ppm was determined to be 5.0000, the integral for 5H of the phenyl portion of the N-phenyl-γ-aminopropyl trimethoxysilane that appeared at a chemical shift of 6.4 to 7.1 ppm was 0.8363. When the urea conversion was calculated from these values, it was found to be 83%.

(Production of Hot-Melt Adhesive Agent (H) and Cured Resin Product (H))

The same procedures as in Example 4 were carried out except that 50 parts by weight of the alkoxysilane-modified polyamide resin (C) was used in place of the alkoxysilane-modified polyamide resin (A), to prepare a hot-melt adhesive agent (H), so that a cured resin product (H) was produced.

When the heat resistance and tensile strength of the cured resin product (H) thus produced were determined by the above methods, the cured resin product (H) had a softening initiation temperature of 230˚C and a tensile strength

of 4.34 MPa (cf. Table 2).

Example 7

(Production of Alkoxysilane-Modified Polyamide Resin (D))

The same procedures as in Example 5 were carried out except that the dropping temperature and the reaction temperature were changed from 120˚C to 150˚C, to produce an alkoxysilane-modified polyamide resin (D).

The alkoxysilane-modified polyamide resin (D) thus produced had an isocyanate group content of 0.1% by weight or less, a viscosity of 5300 mPa·s/100˚C, and a number average molecular weight of 4200.

The $^1$H-NMR of the alkoxysilane-modified polyamide resin (D) produced was measured. Referring to the NMR chart, when the integral for 5H of the phenyl portion of the N-phenyl-γ-aminopropyl trimethoxysilane and its derivative that appeared at a chemical shift of 6.4 to 7.5 ppm was determined to be 5.0000, the integral for 5H of the phenyl portion of the N-phenyl-y-aminopropyl trimethoxysilane that appeared at a chemical shift of 6.4 to 7.1 ppm was 0.8829. When the urea conversion was calculated from these values, it was found to be 82%.

(Production of Hot-Melt Adhesive Agent (I) and Cured Resin Product (I))

The same procedures as in Example 4 were carried out except that 50 parts by weight of the alkoxysilane-modified polyamide resin (D) was used in place of the alkoxysilane-modified polyamide resin (A), to prepare a hot-melt adhesive agent (I), so that a cured resin product (I) was produced.

When the heat resistance and tensile strength of the cured resin product (I) thus produced were determined by the above methods, the cured resin product (I) had a softening initiation temperature of 220˚C and a tensile strength of 4.00 MPa (cf. Table 2).

Example 8

(Production of Terminal Isocyanate Group-Containing Polyamide Resin (F))

The same procedures as in Example 4 were carried out except that 1000.9 parts by weight of the polyester polycarboxylic acid (B), 0.285 parts by weight of magnesium stearate (0.050 parts by mole per 100 parts by mole of the carboxyl group of the polyester polycarboxylic acid), and 0.600 parts by weight of FLOWLEN AC-1190 were charged and the amount of the 1,3-bis(isocyanatomethyl) cyclohexane was changed to 199.1 parts by weight (the NCO/COOH equivalent ratio: 2.14), so that a terminal isocyanate group-containing polyamide resin (F) was produced.

The terminal isocyanate group-containing polyamide resin (F) thus produced had an isocyanate group content of 4.0% by weight (theoretical value: 4.0% by weight).

The $^1$H-NMR of the terminal isocyanate group-containing polyamide resin (F) produced was measured. Referring to the NMR chart, when the integral of the 0.7381H region appeared at a chemical shift of 0.6 ppm, in 10H of the alicyclic portion of the 1,3-bis(isocyanatomethyl) cyclohexane derivative, was determined to be 0.7381, the amide conversion was calculated from the integral for the amide NH proton that appeared at a chemical shift of 7.8 ppm. As a result, the amide conversion was found to be 87%.

(Production of Alkoxysilane-Modified Polyamide Resin (E))

The same procedures as in Example 4 were carried out except that 253.1 parts by weight of the terminal isocyanate group-containing polyamide resin (F) was charged in place of the terminal isocyanate group-containing polyamide resin (D), and 46.9 parts by weight of N-methyl-y-aminopropyl trimethoxysilane (the NCO/NH equivalent ratio: 1.00) was added dropwise in place of the N-phenyl-γ-aminopropyl trimethoxysilane, so that an alkoxysilane-modified polyamide resin (E) was produced.

The alkoxysilane-modified polyamide resin (E) thus produced had an isocyanate group content of 0.1% by weight or less, a viscosity of 2100 mPa·s/100˚C, and a number average molecular weight of 3200.

The $^1$H-NMR of the alkoxysilane-modified polyamide resin (E) produced was measured. Referring to the NMR chart, when the integral for the amide NH of the N-methyl-γ-aminopropyl trimethoxysilane derivative that appeared at a chemical shift of 7.8 ppm was determined to be 0.8700, the urea conversion was calculated from the integral for the urea NH that appeared at a chemical shift of 6.1 to 6.2. As a result, the urea conversion was found to be 99%.

(Production of Hot-Melt Adhesive Agent (J) and Cured Resin Product (J))

The same procedures as in Example 4 were carried out except that 50 parts by weight of the alkoxysilane-modified polyamide resin (E) was used in place of the alkoxysilane-modified polyamide resin (A), to prepare a hot-melt adhesive agent (J), so that a cured resin product (J) was produced.
When the heat resistance and tensile strength of the cured resin product (J) thus produced were determined by the above methods, the cured resin product (J) had a softening initiation temperature of 280˚C and a tensile strength of 5.17 MPa (cf. Table 2).

Example 9

(Production of Terminal Isocyanate Group-Containing Polyamide Resin (G))

A 1-liter reaction flask equipped with a reflux condenser, a nitrogen gas inlet tube, a thermometer, and a stirrer was charged with 202.0 parts by weight of 1, 3-bis (isocyanatomethyl) cyclohexane (trade name: TAKENATE 600, manufactured by Mitsui Chemicals Polyurethanes, Inc., isocyanato content: 43.3% by weight), 0.103 parts by weight of magnesium stearate (0.017 parts by mole per 100 parts by mole of the carboxyl group of the dimer acid), and 0.250 parts by weight of FLOWLEN AC-1190 (a defoaming agent, manufactured by Kyoeisha Chemical Co., Ltd.), and heated up to 60˚C with a mantle heater while introducing nitrogen.
Subsequently, 298.0 parts by weight of a hydrogenated high-purity dimer acid (trade name: PRIPOL1009, manufactured by Unichema, acid value: 196 mg KOH/g) (the NCO/COOH equivalent ratio: 2.00) was added thereto and heated up to 70˚C. The reaction was then continued at a reaction temperature of 70˚C for 7 hours, to produce a terminal isocyanate group-containing polyamide resin (G).
The terminal isocyanate group-containing polyamide resin (G) thus produced had an isocyanate content of 10.0% by weight (theoretical value: 9.6% by weight), a viscosity of 1800 mPa·s/100˚C, and a number average molecular weight of 1800.
The amide conversion was calculated from the amount of carbon dioxide that was obtained from the reduced weight of the reaction mass after the reaction relative to the total charged amount was 89%.

(Production of Alkoxysilane-Modified Polyamide Resin (F))

A 1-liter reaction flask equipped with a reflux condenser, a nitrogen gas inlet tube, a thermometer, and a stirrer was charged with 419.6 parts by weight of the terminal isocyanate group-containing polyamide resin (G), and heated up to 75˚C with a mantle heater while introducing nitrogen.
Subsequently, 254.9 parts by weight of N-phenyl-γ-aminopropyl trimethoxysilane (trade name: KBM573, manufactured by Shin-Etsu Chemical Co., Ltd.) (the NCO/NH equivalent ratio: 1.00) was added dropwise over 1.5 hours using a dropping funnel. After completion of the dropwise addition, the reaction was continued for 2 hours, to produce an alkoxysilane-modified polyamide resin (F).
The alkoxysilane-modified polyamide resin (F) thus produced had an isocyanate content of 0.1% by weight, a viscosity of 2000 mPa·s/100˚C, and a number average molecular weight of 1600.

(Production of Hot-Melt Adhesive Agent (K) and Cured Resin Product (K))

The same procedures as in Example 4 were carried out except that 50 parts by weight of the alkoxysilane-modified polyamide resin (F) was used in place of the alkoxysilane-modified polyamide resin (A), to prepare a hot-melt adhesive agent (K), so that a cured resin product (K) was produced.
When the heat resistance and tensile strength of the cured resin product (K) thus produced were determined by the above methods, the cured resin product (K) had a softening initiation temperature of 240˚C and a tensile strength of 54.5 MPa (cf. Table 2).

Comparative Example 3

(Production of Alkoxysilane-Modified Polyamide Resin (G))

The same procedures as in Example 4 were carried out except that the amount of the terminal isocyanate group-containing polyamide resin (D) charged was changed to 259.1 parts by weight, and 40.9 parts by weight of γ-aminopropyl trimethoxysilane (trade name: KBM903, manufactured by Shin-Etsu Chemical Co., Ltd.) (the $NCO/NH_2$ equivalent ratio: 1.00) was added dropwise in place of the N-phenyl-γ-aminopropyl trimethoxysilane, so that an alkoxysilane-modified polyamide resin (F) was attempted to be produced.

After completion of the dropwise addition, however, gelation occurred at the time when the reaction was continued at a reaction temperature of 70˚C for 30 minutes, resulting in failure of stirring.

Comparative Example 4

(Production of Terminal Isocyanate Group-Containing Polyurethane Resin (C))

A 500-milliliter reaction flask equipped with a reflux condenser, a nitrogen gas inlet tube, a thermometer, and a stirrer was charged with 208.9 parts by weight of the polyester polyol (A) and 41.1 parts by weight of 1,3-bis(isocyanatomethyl) cyclohexane (trade name: TAKENATE 600, manufactured by Mitsui Chemicals Polyurethanes, Inc., isocyanato content: 43.3% by weight) (the NCO/OH equivalent ratio: 2.13), and heated up to 75˚C with a mantle heater while introducing nitrogen. The reaction was then continued at a reaction temperature of 75˚C for 5 hours, to produce a terminal isocyanate group-containing polyurethane resin (C).

The terminal isocyanate group-containing polyurethane resin (C) thus produced had an isocyanate group content of 3.6% by weight.

(Production of Alkoxysilane-Modified Polyurethane Resin (A))

A 500-milliliter reaction flask equipped with a reflux condenser, a nitrogen gas inlet tube, a thermometer, and a stirrer was charged with 205.1 parts by weight of the terminal isocyanate group-containing polyurethane resin (C), and heated up to 70˚C with a mantle heater while introducing nitrogen.

Subsequently, 44.9 parts by weight of N-phenyl-γ-aminopropyl trimethoxysilane (trade name: KBM573, manufactured by Shin-Etsu Chemical Co., Ltd.) (the NCO/NH equivalent ratio: 1.00) was added dropwise over 1 hour using a dropping funnel. After completion of the dropwise addition, the reaction was continued for 2 hours, to produce an alkoxysilane-modified polyurethane resin (A).

The alkoxysilane-modified polyurethane resin (A) thus produced had an isocyanate group content of 0.1% by weight or less.

(Production of Hot-Melt Adhesive Agent (L) and Cured Resin Product (L))

A plastic container was charged with 50 parts by weight of the alkoxysilane-modified polyurethane resin (A), 0.5 parts by weight of stannous octoate, and 0.5 parts by weight of tetraethoxysilane, and was subjected to a vacuum defoaming treatment with a vacuum dryer at 100˚C for 30 minutes, to prepare a one-part moisture-curable hot-melt adhesive agent (L).

The hot-melt adhesive agent (L) was casted on an SUS plate, which an appropriate amount of a releasing agent MIRAX RS-102 (manufactured by Katsuzai Chemicals Corp.) was applied to a surface of and was heated to 100˚C, so that the cured product after moisture-curing had a thickness of 0.8 to 1.5 mm. The casted product was then left to stand for 48 hours on the conditions of 23˚C, 50% RH under air, and was moisture-cured over 48 hours on the conditions of 80˚C, 30% RH under air, to produce a cured resin product (L).

When the heat resistance and tensile strength of the cured resin product (L) thus produced were determined by the above methods, the cured resin product (L) had a softening initiation temperature of 190˚C and a tensile strength of 3.41 MPa (cf. Table 3).

Comparative Example 5

(Production of Alkoxysilane-Modified Polyurethane Resin (B))

A 500-milliliter reaction flask equipped with a reflux condenser, a nitrogen gas inlet tube, a thermometer, and a stirrer was charged with 223.2 parts by weight of the terminal isocyanate group-containing polyurethane resin (C), and heated up to 70˚C with a mantle heater while introducing nitrogen.

Subsequently, 36.5 parts by weight of the N-methyl-γ-aminopropyl trimethoxysilane (the NCO/NH equivalent ratio: 1.01) was added dropwise over 1 hour using a dropping funnel. After completion of the dropwise addition, the reaction was continued for 2 hours, to produce an alkoxysilane-modified polyurethane resin (B).

The alkoxysilane-modified polyurethane resin (B) thus produced had an isocyanate group content of 0.1% by weight or less.

(Production of Hot-Melt Adhesive Agent (M) and Cured Resin Product (M))

The same procedures as in Comparative Example 4 were carried out except that 50 parts by weight of the alkoxysilane-modified polyurethane resin (B) was used in place of the alkoxysilane-modified polyurethane resin (A), to prepare a hot-melt adhesive agent (M), so that a cured resin product (M) was produced.
When the heat resistance and tensile strength of the cured resin product (M) thus produced were determined by the above methods, the cured resin product (M) had a softening initiation temperature of 240˚C and a tensile strength of 4.40 MPa (cf. Table 3).

Comparative Example 6

(Production of Alkoxysilane-Modified Polyurethane Resin (C))

A 1-liter reaction flask equipped with a reflux condenser, a nitrogen gas inlet tube, a thermometer, and a stirrer was charged with 323.2 parts by weight of the terminal isocyanate group-containing polyurethane resin (B), and heated up to 80˚C with a mantle heater while introducing nitrogen.
Subsequently, 176.8 parts by weight of N-phenyl-γ-aminopropyl trimethoxysilane (trade name: KBM573, manufactured by Shin-Etsu Chemical Co., Ltd.) (the NCO/NH equivalent ratio: 1.00) was added dropwise over 1.5 hours using a dropping funnel. After completion of the dropwise addition, the reaction was continued for 2 hours, to produce an alkoxysilane-modified polyurethane resin (C).
The alkoxysilane-modified polyurethane resin (C) thus produced had an isocyanate content of 0.1% by weight or less.

(Production of Hot-Melt Adhesive Agent (N) and Cured Resin Product (N))

The same procedures as in Comparative Example 4 were carried out except that 50 parts by weight of the alkoxysilane-modified polyurethane resin (C) was used in place of the alkoxysilane-modif ied polyurethane resin (A), to prepare a hot-melt adhesive agent (N), so that a cured resin product (N) was produced.
When the heat resistance and tensile strength of the cured resin product (N) thus produced were determined by the above methods, the cured resin product (N) had a softening initiation temperature of 190˚C and a tensile strength of 44.2 MPa (cf. Table 3).

Comparative Example 7

(Production of Alkoxysilane-Modified Isocyanate)

A 500-milliliter reaction flask equipped with a reflux condenser, a nitrogen gas inlet tube, a thermometer, and a stirrer was charged with 142.1 parts by weight of N-phenyl-γ-aminopropyl trimethoxysilane (trade name: KBM573, manufactured by Shin-Etsu Chemical Co., Ltd.), and heated up to 70˚C with a mantle heater while introducing nitrogen.
Subsequently, 107.9 parts by weight of 1,3-bis(isocyanatomethyl) cyclohexane (trade name: TAKENATE 600, manufactured by Mitsui Chemicals Polyurethanes, Inc., isocyanate content: 43.3% by weight) (the NCO/NH equivalent ratio: 2.00) was then added thereto, and the reaction was continued for 3 hours, to produce an alkoxysilane-modified isocyanate.
The alkoxysilane-modified isocyanate thus produced had an isocyanate group content of 9.3 by weight.

(Production of Alkoxysilane-Modified Polyamide Resin (H))

A 500-milliliter reaction flask equipped with a reflux condenser, a nitrogen gas inlet tube, a thermometer, and a stirrer was charged with 174.5 parts by weight of the polyester polycarboxylic acid (B), 0.049 parts by weight of magnesium stearate (0.050 parts by mole per 100 parts by mole of the carboxyl group of the polyester polycarboxylic acid), and 0.125 parts by weight of FLOWLEN AC-1190 (a defoaming agent, manufactured by Kyoeisha Chemical Co., Ltd.), and heated up to 70˚C with a mantle heater while introducing nitrogen.
Subsequently, 75.5 parts by weight of the alkoxysilane-modified isocyanate (the NCO/COOH equivalent ratio: 1.00) was then added thereto. After completion of the dropwise addition, the reaction was continued for 7 hours, to produce an alkoxysilane-modified polyamide resin (H).
The alkoxysilane-modified polyamide resin (H) thus produced had an isocyanate group content of 0.1% by weight or less.

(Production of Hot-Melt Adhesive Agent (O) and Cured Resin Product (O))

The same procedures as in Comparative Example 4 were carried out except that 50 parts by weight of the alkoxysilane-modified polyamide resin (H) was used in place of the alkoxysilane-modified polyurethane resin (A), to prepare a hot-melt adhesive agent (O), so that a cured resin product (O) was produced.

When the heat resistance and tensile strength of the cured resin product (O) thus produced were determined by the above methods, the cured resin product (0) had a softening initiation temperature of 200˚C and a tensile strength of 3.50 MPa (cf. Table 3).

[Table 1]

[TABLE 1]

| Ex. /Comp. Ex. | Ex. 1 | Ex. 2 | Ex. 3 | Comp. Ex. 1 | Comp. Ex. 2 |
|---|---|---|---|---|---|
| Type of Resin | Terminal Isocyanate Group-Containing Polyamide Resin (A) *1 | Terminal Isocyanate Group-confining Polyamide Resin (B) *2 | Terminal Isocyanate Group-Containing Polyamide Resin (C) | Terminal Isocyanate Group-Containing Polyurethane Resin (A) | Terminal Isocyanate Group-Containing Polyurethane Resin (B) |
| Type of Oligomer | Polyester Polycarboxylic Acid (A) | Polyester Polycarboxylic Acid (A) | Hydrogenated High-Purity Dimer Acid | Polyester Polyol (A) | Dimer Diol |
| Polyisocyanate Compound | $H_6XDI$ | $H_6XDI$ | $H_6XDI$ | $H_6XDI$ | $H_6XDI$ |
| 10% Mass Reduction Temperature (˚C) | 377 | 376 | 362 | 342 | 325 |
| Tensile Strength (MPa) | 16.7 | 15.1 | 41.9 | 12.6 | 31.4 |
| $H_6XDI$: 1,3-bis(isocyanatomethyl) cyclohexane *1: Reaction temperature 100 ˚C *2: Reaction temperature 110 ˚C | | | | | |

[Table 2]

[TABLE 2]

| Ex. /Comp. Ex. | Ex. 4 | Ex. 5 | Ex. 6 | Ex. 7 | Ex. 8 | Ex. 9 |
|---|---|---|---|---|---|---|
| Type of Resin | Alkoxysilane-Modified Polyamide Resin (A) *1 | Alkoxysilane-Modified Polyamide Resin (B) *2 | Alkoxysilane-Modified Polyamide Resin (C) *4 | Alkoxysilane-Modified Polyamide Resin (D) *5 | Alkoxysilane-Modified Polyamide Resin (E) | Alkoxysilane-Modified Polyamide Resin (F) |
| Terminal Isocyanate Group-Containing Resin | Terminal Isocyanate Group-Containing Polyamide Resin (D) | Terminal Isocyanate Group-Containing Polyamide Resin (E) *3 | Terminal Isocyanate Group-Containing Polyamide Resin (E) | Terminal Isocyanate Group-Containing Polyamide Resin (E) | Terminal Isocyanate Group-Containing Polyamide Resin (F) | Terminal Isocyanate Group-Containing Polyamide Resin (G) |
| ( Type of Oligomer / Polyisocyanate Compound ) | ( Polyester Polycarboxylic Acid (B) / $H_6$XDI ) | ( Polyester Polycarboxylic Acid (B) / $H_6$XDI ) | ( Polyester Polycarboxylic Acid (B) / $H_6$XDI ) | ( Polyester Polycarboxylic Acid (B) / $H_6$XDI ) | ( Polyester Polycarboxylic Acid (B) / $H_6$XDI ) | ( Hydrogenated High-Purity Dimer Acid / $H_6$XDI ) |
| Alkoxysilane Compound | N-phenyl-γ-aminopropyl trimethoxysilane | N-phenyl-γ-aminopropyl trimethoxysilane | N-phenyl-γ-aminopropyl trimethoxysilane | N-phenyl-γ-aminopropyl trimethoxysilane | N-methyl-γ-aminopropyl trimethoxysilane | N-phenyl-γ-aminopropyl trimethoxysilane |
| Softening Initiation Temperature (˚C) | 230 | 220 | 230 | 220 | 280 | 240 |
| Tensile Strength (MPa) | 5.24 | 3.96 | 4.34 | 4.00 | 5.17 | 54.5 |

$H_6$XDI: 1,3-bis(isocyanatomethyl) cyclohexane *1: Reaction temperature 70 ˚C
*2: Reaction temperature 120 ˚c
*3: 2-step reaction
*4: Reaction temperature 130 ˚C
*5: Reaction temperature 150 ˚C

[Table 3]

[TABLE 3]

| Ex. /Comp. Ex. | Comp. Ex. 3 | Comp. Ex. 4 | Comp. Ex. 5 | Comp. Ex. 6 | Comp. Ex. 7 |
|---|---|---|---|---|---|
| Type of Resin | Alkoxysilane-Modified Polyamide Resin (G) | Alkoxysilane-Modified Polyurethane Resin (A) | Alkoxysilane-Modified Polyurethane Resin (B) | Alkoxysilane-Modified Polyurethane Resin (C) | Alkoxysilane-Modified Polyamide Resin (H) |
| Terminal Isocyanate Group-Containing Resin | Terminal Isocyanate Group-Containing Polyamide Resin (D) | Terminal Isocyanate Group-Containing Polyurethane Resin (C) | Terminal Isocyanate Group-Containing Polyurethane Resin (C) | Terminal Isocyanate Group-Containing Polyurethane Resin (B) | Alkoxysilane Isocyanate |
| (Type of Oligomer / Polyisocyanate Compound) | (Polyester Polycarboxylic Acid (B) / $H_6XDI$) | (Polyester Polyol (A) / $H_6XDI$) | (Polyester Polyol (A) / $H_6XDI$) | (Dimer Diol / $H_6XDI$) | ($H_6XDI$ / N-phenyl-γ-aminopropyl trimethoxysilane) |
| Alkoxysilane Compound | γ-aminopropyl trimethoxysilane | N-phenyl- γ-aminopropyl trimethoxysilane | N-methyl-γ-aminopropyl trimethoxysilane | N-phenyl-γ-aminopropyl trimethoxysilane | + Polyester Polycarboxylic Acid (B) |
| Softening Initiation Temperature (˚C) | - | 190 | 240 | 190 | 200 |
| Tensile Strength (MPa) | - | 3.41 | 4.40 | 44.2 | 3.50 |

$H_6XDI$: 1,3-bis(isocyanatomethyl) cyclohexane

While the illustrative embodiments of the present invention are provided in the above description, such is for illustrative purpose only and it is not to be construed restrictively. Modification and variation of the present invention that will be obvious to those skilled in the art is to be covered by the following claims.

INDUSTRIAL APPLICABILITY

The terminal isocyanate group-containing polyamide resin and alkoxysilane-modified polyamide resin of the present invention are effectively used in various industrial fields serving as a one-part moisture-curable resin composition such as a hot-melt adhesive agent.

**Claims**

1. A terminal isocyanate group-containing polyamide resin produced by reacting a terminal carboxyl group-containing oligomer and a polyisocyanate compound at such a ratio that an amount of an isocyanate group exceeds that of a carboxyl group.

2. The terminal isocyanate group-containing polyamide resin according to claim 1, wherein the terminal carboxyl group-containing oligomer is selected from the group consisting of polyester polycarboxylic acid produced by reaction between a polybasic acid and a polyhydric alcohol, and dimer acid.

3. An alkoxysilane-modified polyamide resin produced by reacting

   a terminal isocyanate group-containing polyamide resin produced by reacting a terminal carboxyl group-containing oligomer and a polyisocyanate compound at such a ratio that an amount of an isocyanate group exceeds that of a carboxyl group, and
   an alkoxysilane compound comprising a secondary amine.

4. The alkoxysilane-modified polyamide resin according to claim 3, wherein the terminal carboxyl group-containing oligomer is selected from the group consisting of polyester polycarboxylic acid produced by reaction between a polybasic acid and a polyhydric alcohol, and dimer acid.

5. The alkoxysilane-modified polyamide resin according to claim 3, wherein the alkoxysilane compound is represented by the following general formula (1):

   [Chem. 1]

   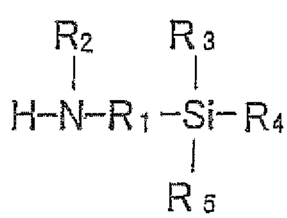

   (1)

   (wherein R1 represents an alkylene group having 1 to 20 carbon atoms, R2 represents a hydrocarbon group having 1 to 20 carbon atoms, and R3, R4, and R5 may be the same or different from each other, and each represents an alkoxy group or an alkyl group having 1 to 20 carbon atoms, with proviso that at least one of R3, R4, and R5 represents an alkoxy group.)

6. A hot-melt adhesive agent comprising:

   a terminal isocyanate group-containing polyamide resin produced by reacting a terminal carboxyl group-containing oligomer and a polyisocyanate compound at such a ratio that an amount of an isocyanate group exceeds that of a carboxyl group, and/or

an alkoxysilane-modified polyamide resin produced by reacting the terminal isocyanate group-containing polyamide resin and an alkoxysilane compound comprising a secondary amine.

**7.** The hot-melt adhesive agent according to claim 6, being a one-part moisture-curable adhesive agent.

**8.** A cured resin product produced by curing

a terminal isocyanate group-containing polyamide resin produced by reacting a terminal carboxyl group-containing oligomer and a polyisocyanate compound at such a ratio that an amount of an isocyanate group exceeds that of a carboxyl group, and/or
an alkoxysilane-modified polyamide resin produced by reacting the terminal isocyanate group-containing polyamide resin and an alkoxysilane compound comprising a secondary amine.

**9.** A process for producing a terminal isocyanate group-containing polyamide resin, comprising:

reacting a terminal carboxyl group-containing oligomer and a polyisocyanate compound
at such a ratio that an amount of an isocyanate group exceeds that of a carboxyl group,
in the presence of a catalyst selected from the group consisting of alkali metal salts and/or alkaline earth metal salts in an amount 0.001 to 10 parts by mole per 100 parts by mole of all the carboxyl groups in the terminal carboxyl group-containing oligomer.

**10.** The process for producing a terminal isocyanate group-containing polyamide resin according to claim 9, wherein the reaction is performed at 120˚C or less.

**11.** The process for producing a terminal isocyanate group-containing polyamide resin according to claim 9, wherein the catalyst is magnesium stearate.

**12.** The process for producing a terminal isocyanate group-containing polyamide resin according to claim 9, wherein the terminal carboxyl group-containing oligomer is selected from the group consisting of polyester polycarboxylic acid produced by reaction between a polybasic acid and a polyhydric alcohol, and dimer acid.

**13.** A process for producing an alkoxysilane-modified polyamide resin, comprising:

producing a terminal isocyanate group-containing polyamide resin by reacting a terminal carboxyl group-containing oligomer and a polyisocyanate compound at such a ratio that an amount of an isocyanate group exceeds that of a carboxyl group, in the presence of a catalyst selected from the group consisting of alkali metal salts and/or alkaline earth metal salts in an amount 0.001 to 10 parts by mole per 100 parts by mole of all the carboxyl groups in the terminal carboxyl group-containing oligomer; and
reacting the terminal isocyanate group-containing polyamide resin and an alkoxysilane compound containing a secondary amine.

**14.** The process for producing an alkoxysilane-modified polyamide resin according to claim 13, wherein the terminal carboxyl group-containing oligomer and the polyisocyanate compound are reacted at 120˚C or less.

**15.** The process for producing an alkoxysilane-modified polyamide resin according to claim 13, wherein the terminal isocyanate group-containing polyamide resin and the alkoxysilane compound are reacted at 150˚C or less.

**16.** The process for producing an alkoxysilane-modified polyamide resin according to claim 13, wherein the catalyst is magnesium stearate.

**17.** The process for producing an alkoxysilane-modified polyamide resin according to claim 13, wherein the terminal carboxyl group-containing oligomer is selected from the group consisting of polyester polycarboxylic acid produced by reaction between a polybasic acid and a polyhydric alcohol, and dimer acid.

**18.** The process for producing an alkoxysilane-modified polyamide resin according to claim 13, wherein the alkoxysilane compound is represented by the following general formula (1):

[Chem. 2]

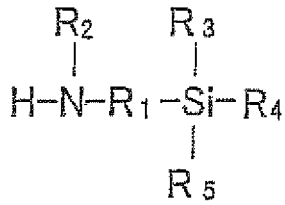

(1)

(wherein R1 represents an alkylene group having 1 to 20 carbon atoms, R2 represents a hydrocarbon group having 1 to 20 carbon atoms, and R3, R4, and R5 may be the same or different from each other, and each represents an alkoxy group or an alkyl group having 1 to 20 carbon atoms, with proviso that at least one of R3, R4, and R5 represents an alkoxy group.)

**INTERNATIONAL SEARCH REPORT**

International application No.
PCT/JP2007/067509

A. CLASSIFICATION OF SUBJECT MATTER
*C08G18/42*(2006.01)i, *C09J175/06*(2006.01)i

According to International Patent Classification (IPC) or to both national classification and IPC

B. FIELDS SEARCHED

Minimum documentation searched (classification system followed by classification symbols)
C08G18/42, C09J175/06

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 7-503037 A (Henkel KGaA),<br>30 March, 1995 (30.03.95),<br>Claims 1, 20; page 6, upper right column, line 26 to lower left column, line 2; examples<br>& WO 1993/015121 A1 & EP 624170 A1<br>& US 5527876 A & DE 4215647 A1 | 1,2,6-8<br>3-5,13-18 |
| X | WO 2005/066235 A1 (Mitsui Takeda Chemicals, Inc.),<br>21 July, 2005 (21.07.05),<br>Claims; Par. No. [0055]; examples<br>& EP 1702937 A1 & CA 1906223 A | 1,2,8-12 |
| X<br>Y | JP 2003-41207 A (Hitachi Chemical Co., Ltd.),<br>13 February, 2003 (13.02.03),<br>Claims; Par. No. [0027]<br>(Family: none) | 1,2,6-8<br>3-5,13-18 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>26 September, 2007 (26.09.07) | Date of mailing of the international search report<br>09 October, 2007 (09.10.07) |
| Name and mailing address of the ISA/<br>Japanese Patent Office<br>Facsimile No. | Authorized officer<br><br>Telephone No. |

Form PCT/ISA/210 (second sheet) (April 2005)

**INTERNATIONAL SEARCH REPORT**

International application No.
PCT/JP2007/067509

C (Continuation). DOCUMENTS CONSIDERED TO BE RELEVANT

| Category* | Citation of document, with indication, where appropriate, of the relevant passages | Relevant to claim No. |
|---|---|---|
| X<br>Y | JP 2001-131525 A (Hitachi Chemical Co., Ltd.), 15 May, 2001 (15.05.01), Claim 1; Par. No. [0024] (Family: none) | 1,6-8<br>3-5,13-18 |
| X<br>Y | JP 64-56716 A (Asahi Glass Co., Ltd.), 03 March, 1989 (03.03.89), Claims; page 4, lower left column (Family: none) | 1,6-8<br>3-5,13-18 |
| X<br>Y | JP 1-168718 A (Japan Synthetic Rubber Co., Ltd.), 04 July, 1989 (04.07.89), Claims; page 7, upper left column (Family: none) | 1,6-8<br>3-5,13-18 |
| X | JP 6-248044 A (Hitachi Chemical Co., Ltd.), 06 September, 1994 (06.09.94), Claims (Family: none) | 1 |
| Y | JP 2004-107640 A (Mitsui Takeda Chemicals, Inc.), 08 April, 2004 (08.04.04), Claims; Par. No. [0058] & WO 2004/011570 A1 & US 2005/272898 A1 & EP 1541655 A1 & CN 1671815 A | 3-5,13-18 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003277717 A
- JP 7278320 A
- JP 10110153 A
- JP 1503149 A